# EUROPÄISCHE PATENTANMELDUNG

(11) **EP 1 867 953 A2**
(43) Veröffentlichungstag der Anmeldung: **19.12.2007**
(21) Anmeldenummer: 07011461.6
(22) Anmeldetag: 12.06.2007
(51) Int. Cl.: G01C 21/36, G08G 1/0969

(54) **Modulare Navigationseinrichtung für Media Player**

(30) Priorität: 16.06.2006 US 804992 P
(71) Anmelder: Navigon AG, 20251 Hamburg (DE)
(72) Erfinder: Hess, Philipp, 22927 Grosshansdorf (DE); Schindler, Uwe, 97236 Randersacker (DE)
(74) Vertreter: von den Steinen, Axel

(57) **Zusammenfassung**

Die Erfindung betrifft eine Navigationseinrichtung sowie ein Verfahren zur Ausgabe von Navigationsanweisungen. Die Navigationseinrichtung umfasst eine Navigationseinheit (2), eine Positionsbestimmungseinrichtung, eine Prozessoreinrichtung mit Arbeitsspeicher, eine Massenspeichereinrichtung zur Aufnahme einer Datenbank, eine Anzeigeeinrichtung, eine Bedienelementanordnung, eine Tonausgabeeinrichtung sowie eine Navigationssoftware

Die Erfindung zeichnet sich dadurch aus, dass dass die Anzeigeeinrichtung und die Bedienelementanordnung separat in einem mobilen Multimedia-Abspielgerät (1) angeordnet sind.

Die Erfindung ermöglicht eine Zusammenführung der beiden separaten Geräte- und Dienstleistungsgattungen 'Navigation' und 'Persönliches Multimedia' mittels Erweiterung des Einsatzbereichs von Multimedia-Abspielgeräten und zugehöriger Anbieterservices auf das Gebiet der Navigation. Dabei bleiben die dem Nutzer vertraute Bedienoberfläche und der gewohnte Zugang zu den Daten und Services des Dienstleistungsanbieters auch für den neuen Anwendungsbereich der Navigation erhalten. Ferner werden Hardwarekosten eingespart und die Bedienung durch Vereinheitlichung der Benutzeroberflächen vereinfacht.

## Beschreibung

Die Erfindung betrifft eine modulare Navigationseinrichtung für einen Media Player gemäß Patentanspruch 1 sowie ein Verfahren zur Ausgabe von Navigationsanweisungen gemäß Patentanspruch 15.

Die Verbreitung von portablen Media Playern bzw. Multimedia-Abspielgeräten hat aufgrund der steigenden Leistungsfähigkeit der Geräte und Verbesserungen der zugehörigen Services in den letzten Jahren stetig zugenommen. Immer mehr Verbraucher tragen derartige portable Media Player vor allem dann bei sich, wenn sie sich außerhalb des häuslichen Umfelds bewegen, beispielsweise auf Reisen, in öffentlichen Verkehrsmitteln oder im Kraftfahrzeug.

Gerade unterwegs besteht jedoch oft nicht nur ein Bedürfnis des Verbrauchers nach musikalischer Zerstreuung mittels eines derartigen tragbaren Multimedia-Abspielgeräts, sondern es wird gerade in diesem Fall auch häufig Unterstützung bei der Orientierung und Zielfindung in unbekannter Umgebung benötigt. Zu diesem Zweck existieren bereits mannigfaltige Formen von Navigationsgeräten, die entweder als portables Handgerät gestaltet oder beispielsweise zum Einbau im Kraftfahrzeug vorgesehen sind.

Nutzer solcher Geräte, die sowohl häufig einen portablen Media Player mit sich führen, als auch regelmäßig ein Navigationsgerät einsetzen, sind zu diesem Zweck jedoch bisher im allgemeinen gezwungen, für die unterschiedlichen Zwecke "Medienunterhaltung" und "Navigation" separate und völlig verschiedene Geräte mitzuführen bzw. bedienen zu müssen.

Dies ist nicht nur nachteilig aufgrund der Mehrzahl mitzuführender Geräten, sondern auch aufgrund der Notwendigkeit, sich jeweils auf die unterschiedliche Bedienung dieser Geräte einzustellen, bzw. deren Bedienung zunächst einmal zu erlernen. Gerade unterwegs ist zudem die Handhabung und der Wechsel zwischen mehreren Geräten für unterschiedliche Zwecke lästig, oder kann sogar zu einem Sicherheitsproblem führen, insbesondere wenn bei der Fahrt mit dem Kraftfahrzeug die Konzentration des Fahrers durch die Bedienung der verschiedenen Geräte vom Straßengeschehen abgelenkt wird.

Schließlich führt die im Stand der Technik gegebene Notwendigkeit, zu Medienunterhaltung und Navigation separate Geräte vorhalten und mitnehmen zu müssen, zu unnötig mehrfach vorhandener und vom Verbraucher zu bezahlender, weitgehend identischer Hardware; wie beispielsweise von Prozessoren, Bedienelementen, Anzeigebildschirmen, Gerätegehäusen usw.

Mit diesem Hintergrund ist es Aufgabe der vorliegenden Erfindung, eine modulare Navigationseinrichtung sowie ein Verfahren zur Ausgabe von Navigationsanweisungen zu schaffen, womit die genannten, im Stand der Technik vorhandenen Nachteile überwunden werden. Insbesondere soll die Erfindung für den Nutzer eine möglichst enge Zusammenführung der beiden bisher separaten Gerätegattungen der portablen Media Player und der kompakten Navigationsgeräte ermöglichen.

Diese Aufgabe wird durch eine Navigationseinrichtung gemäß Patentanspruch 1 bzw. durch ein Verfahren nach Patentanspruch 15 gelöst.

Bevorzugte Ausführungsformen sind Gegenstand der Unteransprüche.

Die Navigationseinrichtung gemäß der vorliegenden Erfindung umfasst in an sich zunächst bekannter Weise eine Navigationseinheit mit einer insbesondere einen GPS-Empfänger umfassenden Positionsbestimmungseinrichtung, eine Prozessoreinrichtung mit Arbeitsspeicher, eine Massenspeichereinrichtung zur Aufnahme einer Datenbank mit geographischen Daten, ferner eine Anzeigeeinrichtung, eine Bedienelementanordnung, eine Einrichtung zur Tonausgabe sowie eine in den Arbeitsspeicher bzw. in die Prozessoreinrichtung aufnehmbare Navigationssoftware.

Erfindungsgemäß zeichnet sich die Navigationseinrichtung jedoch dadurch aus, dass Anzeigeeinrichtung und Bedienelementanordnung separat von der Navigationseinheit in einem mobilen Multimedia-Abspielgerät bzw. Media Player angeordnet sind.

Auf diese Weise wird zunächst einmal eine vorteilhafte Funktionsvereinigung erreicht. Denn der Einsatzbereich eines nutzerseitig häufig ohnehin vorhandenen bzw. anzuschaffenden mobilen Media Players kann - mittels der erfindungsgemäßen Erweiterung durch eine Navigationseinheit - erheblich vergrößert werden in der Form, dass der Media Player nun zusätzlich auch als Steuerzentrale für die mobile Navigation herangezogen werden kann.

Durch die beispielsweise als "Navigationszubehörteil" für einen bereits existierenden bzw. am Markt erhältlichen Media Player ausgebildete Navigationseinheit lässt sich somit in Form der Navigation ein weiteres Einsatzfeld für den Media Player erschließen. Insbesondere kann dabei für den Nutzer das bereits bekannte oder gewohnte Bedienkonzept des Media Players beibehalten bzw. auf das Einsatzfeld der Navigation erweitert werden, sprich, der Nutzer muss kein weiteres Bedienkonzept erlernen, sondern kann sowohl Medienzugriff als auch Navigation über die einheitliche Benutzeroberfläche des Media Players ohne Medienbruch abwickeln.

Zudem werden die kumulierten Hardwarekosten im Vergleich zu eigenständigen, zusätzlich zum Medien-Abspielgerät bereitzustellenden Navigationslösungen verringert, da anstelle zusätzlicher bzw. proprietärer Hardware zur Navigation ein Großteil der bereits mit dem Media Player vorhandenen Hardware genutzt werden kann, insbesondere Bildschirm, Gehäuse, Tonwiedergabeeinrichtung sowie Bedienelemente des Media Players.

Schließlich können auch bereits vorhandene, dem Media Player zugeordnete Services bzw. Zugangswege zu anbieterseitigen Datenbanken in vorteilhafter Weise mitgenutzt bzw. auf das Gebiet geographischer Navigationsdaten, zugehöriger Software sowie damit etwa verknüpfter Mehrwertdienste erweitert werden.

Zur Verwirklichung der Erfindung ist es dabei zunächst nicht relevant, auf welche Weise die konstruktive oder datenmäßige Kopplung bzw. Aufgabenteilung zwischen Media Player und Navigationseinheit erfolgt, solange die Bedienbarkeit der Navigationsfunktionen über die Benutzeroberfläche des Media Players gewährleistet ist.

Gemäß einer besonders bevorzugten Ausführungsform der Erfindung sind jedoch Listen von Navigationszielen sowie zugehörige Steuerzeichen zur Steuerung von Navigationsfunktionen in ein zum Medien-Wiedergabelistenformat des Multimedia-Abspielgeräts kompatibles Listenformat gewandelt und in diesem Format im Arbeitsspeicher oder Massenspeicher der Navigationseinrichtung gespeichert. Diese Ausführungsform besitzt den besonderen Vorteil, dass Listen von Navigationszielen genau wie übliche Medien-Wiedergabelisten auf einem Display des Media Players dargestellt werden können.

Der Nutzer kann somit in der von der Mediennutzung gewohnten Weise über die Bedienelemente des Media Players die Listen von möglichen Navigationszielen durchsuchen und das gewünschte Element bzw. Navigationsziel auswählen. Hierbei ist zunächst einmal auch keine Modifikation des Media Player-Betriebssystems oder gar der Hardware des Media Players erforderlich, um neben Medientiteln auch Navigationsziele auf dem Display des Media Players anzeigen und über die Bedienelemente des Media Players suchen und auswählen zu können.

Gemäß einer weiteren, bevorzugten Ausführungsform der Erfindung umfasst die Navigationseinrichtung ferner eine Einrichtung zur Umwandlung einer Routenführungsgrafik in ein zum Ausgabegrafikformat des Multimedia-Abspielgeräts kompatibles Grafikformat. Auf diese Weise können auch Routenführungsgrafiken bei weitestgehend unveränderter Hardware und Software des Media Players über den Bildschirm des Media Players ausgegeben werden. Zudem ist in diesem Fall praktisch keine zusätzliche Prozessorleistung des Media Players zur Darstellung bzw.

Ausgabe der Routenführungsgrafiken erforderlich.

Nach einer weiteren bevorzugten Ausführungsform der Erfindung umfasst die Navigationseinheit eine Einrichtung zur Übertragung des von dem Multimedia-Abspielgerät gelieferten Audiosignals an ein externes Lautsprechersystem. Diese Ausführungsform ist vorteilhaft insbesondere insofern, als auf diese Weise beim Einsatz der erfindungsgemäßen Navigationseinrichtung z.B. im Kraftfahrzeug beispielsweise Musik aus dem Media Player mit den in der Navigationseinheit erzeugten akustischen Navigationsanweisungen gemischt, und sodann über ggf. externe Lautsprecher, insbesondere über in einem Fahrzeug bereits eingebaute Lautsprecher, wiedergegeben werden kann.

Ferner kann dank dieser Ausführungsform die Wiedergabelautstärke sowohl der Navigationsanweisungen aus der Navigationseinheit als auch der Musik aus dem Media Player komplett durch die Navigationseinheit kontrolliert und bedarfsweise angepasst werden. Insbesondere kann die Lautstärke der Musikwiedergabe während der Durchsage von Navigationsanweisungen zur besseren Verständlichkeit automatisch reduziert werden.

Eine weitere Ausführungsform der Erfindung sieht vor, dass die Massenspeichereinrichtung der Navigationseinrichtung im Multimedia-Abspielgerät angeordnet ist. Dank dieser Ausführungsform können weitere Einsparungen bei den Hardwarekosten erzielt werden, da auf diese Weise Navigationsdaten und/oder Navigationssoftware insbesondere in den bereits vorhandenen Massenspeicher - zum Beispiel in die Festplatte oder den Flash-Speicher des Media Players - aufgenommen werden können. Ein eigener externer bzw. in der Navigationseinheit anzuordnender Massenspeicher zur Realisierung der Zusatzfunktion "Navigation" für den Media Player kann somit entfallen.

Gemäß einer besonders bevorzugten Ausführungsform der Erfindung ist vorgesehen, dass die Navigationseinheit eine zu der standardisierten Schnittstelle des Multimedia-Abspielgeräts kompatible Übertragungsschnittstelle aufweist. Auf diese Weise kann eine einfache und schnelle Verbindung des Media Players mit der Navigationseinheit erfolgen, wenn der Media Player zu Navigationszwecken eingesetzt werden soll. Ebenso kann der Media Player einfach und rasch von der Navigationseinheit getrennt werden, wenn er wieder separat und lediglich für Medienwiedergabezwecke genutzt werden soll. Die Ausführung der Navigationseinheit mit einer zu der standardisierten Schnittstelle des Media Players kompatiblen Schnittstelle ist auch insofern vorteilhaft, als somit vorhandene bzw. auf dem Markt befindliche Media Player ohne Modifikation an ihrer Hardware mit der Navigationseinheit kombiniert werden können.

Mit diesem Hintergrund sieht eine weitere Ausführungsform der Erfindung vor, dass die Übertragungsschnittstelle zwischen Media Player und Navigationseinheit eine drahtlose Schnittstelle ist. Auf diese Weise können Daten zwischen Media Player und Navigationseinheit berührungslos übertragen werden, was die Kopplung zwischen Media Player und Navigationseinheit zum Zweck der Nutzung des Media Players zur Navigation noch weiter vereinfacht. Denn es genügt somit, den Media Player lediglich in die Nähe der Navigationseinheit zu bringen, um über die Bedienoberfläche des Media Players auch die Navigationsfunktionen nutzen zu können. Der Media Player kann damit insbesondere für den Beispielfall der Anwendung im Kraftfahrzeug besonders einfach mit einer entsprechenden Halterung am Armaturenbrett verbunden werden, ohne dass auf den korrekten Sitz einer mechanischen Datenübertragungsschnittstelle geachtet werden müsste.

Gemäß einer bevorzugten Ausführungsform der Erfindung ist die Navigationseinheit in einem Kraftfahrzeug eingebaut. Diese Ausführungsform bedeutet mit anderen Worten, dass der portable Media Player somit einen Teil einer Navigationseinrichtung für ein Kraftfahrzeug darstellt. Hierdurch ergeben sich zunächst einmal Kosteneinsparungen bei der Fahrzeugausrüstung, da der Aufwand vor allem für eine eigene Anzeigeeinrichtung sowie für zusätzliche Bedienelemente einer Navigationseinrichtung entfallen kann. Ferner hat diese Ausführungsform den Vorteil, dass sich das vom Media Player für den Nutzer gewohnte Bedienkonzept somit auch zum Zweck der Navigation im Kraftfahrzeug anwenden lässt. Schließlich ergibt sich ein vorteilhafter Synergieeffekt aufgrund der Möglichkeit, mit dem Media Player im Fahrzeug sowohl die persönliche Musiksammlung abspielen zu können, als auch - ggf. gleichzeitig - die Fahrzeugnavigation zu betreiben.

Überdies lässt sich eine Verbesserung der Sicherheit im Verkehr erreichen, da auf diese Weise Navigation und Medienzugriff über die gewohnt einfache und einheitliche Bedienoberfläche des Media Players erfolgt.

Gemäß einer weiteren Ausführungsform der Erfindung umfasst die Navigationseinheit ein Bedienelement zur Umschaltung des Multimedia-Abspielgeräts zwischen dem Medien-Abspielbetrieb und dem Navigationsbetrieb. Diese Ausführungsform besitzt insbesondere den Vorteil der einfachen und kostengünstigen Umsetzbarkeit der erfindungsgemäßen Kombination aus Media Player und Navigationszubehörteil. Insbesondere kann ein Media Player dank dieser Ausführungsform praktisch ohne jegliche Änderungen an der Player-Hardware und ohne oder nur mit minimalen Änderungen an der Player-Software mit der Navigationseinheit bzw. den Navigationszubehörteil verbunden werden und als Bedienoberfläche für die Navigation eingesetzt werden. Denn die notwendige Umschaltung zwischen Medien-Abspielbetrieb und Navigationsbetrieb kann dank dieser Ausführungsform mittels des an der Navigationseinheit angeordneten zusätzlichen Bedienelements erfolgen, weshalb für die Umschaltung kein zusätzliches Bedienelement und keine Modifikationen am Media Player erforderlich sind.

Gemäß einer weiteren Ausführungsform ist das Bedienelement zur Umschaltung des Media Players zwischen Medien-Abspielbetrieb und Navigationsbetrieb an einer Fernsteuerungseinheit angeordnet. Auf diese Weise ergibt sich insbesondere die Möglichkeit zur flexibleren Anordnung und kompakteren Gestaltung der Navigationseinheit. Da dank dieser Ausführungsform Bedienelemente an der Navigationseinheit selbst ggf. komplett entfallen können, kann diese besonders flexibel gestaltet und angeordnet werden, beispielsweise die externe Form einer simplen Halterung für den Media Player aufweisen.

Gemäß einer besonders bevorzugten Ausführungsform der Erfindung ist das Multimedia-Abspielgerät zum gleichzeitigen Medien-Abspielbetrieb und Navigationsbetrieb eingerichtet. Dies ist vorteilhaft insofern, als der Nutzer somit in der üblichen Weise Medien bzw. Audio mittels des Media Players abspielen kann, wobei jedoch gleichzeitig auch die Bedienung und Steuerung der Navigationseinheit über die Bedienoberfläche des Media Players erfolgen kann. Dies bedeutet mit anderen Worten, dass der Medien-Abspielbetrieb des Media Players beim Steuern der Navigation mittels der Benutzeroberfläche des Media Players nicht komplett verlassen werden oder gar unterbrochen werden muss.

Eine weitere Ausführungsform der Erfindung sieht vor, dass die Navigationseinheit als Halterung für das Multimedia-Abspielgerät ausgebildet ist. Auf diese Weise kann die Navigationseinheit als kompaktes Gerät beispielsweise in Form einer Dockingstation für den Media Player gestaltet werden; es ergeben sich besonders kostengünstige und einfache Möglichkeiten zu Herstellung und Montage der als Halterung ausgebildeten Navigationseinheit, insbesondere im Kraftfahrzeug.

Mit diesem Hintergrund ist es gemäß einer weiteren Ausführungsform vorgesehen, dass die Navigationseinheit eine Halterung für das Multimedia-Abspielgerät sowie eine separate Steuerungseinheit umfasst. So lässt sich die Halterung für den Media Player noch kompakter und platzsparender ausführen, da beispielsweise die komplette Elektronik der Navigationseinheit in der separaten Steuerungseinheit untergebracht ist. Letztere kann wiederum an beliebiger Stelle beispielsweise im Kraftfahrzeug eingebaut werden.

Eine weitere Ausführungsform der Erfindung sieht vor, dass Prozessoreinrichtung und Arbeitsspeicher der Navigationseinrichtung im Multimedia-Abspielgerät angeordnet sind. Auf diese Weise lassen sich Aufwand und Kosten für die Hardware der Navigationseinrichtung noch weiter erheblich reduzieren, da somit Arbeitsspeicher und CPU des Media Players zusätzlich auch zur Abarbeitung der Navigationsaufgaben herangezogen werden können. Diese Ausführungsform bedeutet mit anderen Worten, dass die Navigationssoftware auf dem Media Player als Hardwareplattform selbst läuft, weshalb in der als Navigationszubehör für den Media Player ausgebildeten Navigationseinheit keine eigene CPU und kein eigener Arbeitsspeicher mehr zur Verwirklichung der Navigationsfunktion vorgesehen werden muss.

Die Navigationseinheit kann somit im Wesentlichen auf eine Halterung bzw. Koppelvorrichtung für den Media Player, auf die Positionsbestimmungseinrichtung, insbesondere den GPS-Empfänger, und ggf. auf eine Schnittstelle zur Übertragung von Audiodaten an externe Lautsprecher, insbesondere Fahrzeuglautsprecher, reduziert werden.

Auch andere Aufgabenteilungen zwischen der Navigationseinheit und einem Media Player sind möglich. So kann beispielsweise der Speicher für die Navigationssoftware und/oder eine Einheit zum Rendering der Karten in der Navigationseinheit angeordnet sein, während die restlichen Komponenten der Navigationseinrichtung im Media Player angeordnet sind.

Die Erfindung betrifft ferner ein Verfahren zur Ausgabe von Navigationsanweisungen einer Navigationseinrichtung. Dabei umfasst die Navigationseinrichtung eine Navigationseinheit mit einer Positionsbestimmungseinrichtung, eine Prozessoreinrichtung mit Arbeitsspeicher, eine Massenspeichereinrichtung, eine Anzeigeeinrichtung, eine Bedienelementanordnung sowie ferner eine Tonausgabeeinrichtung und eine in den Arbeitsspeicher bzw. in die Prozessoreinrichtung aufnehmbare Navigationssoftware. Dabei sind Anzeigeeinrichtung und Bedienelementanordnung der Navigationseinrichtung in einem separaten mobilen Multimedia-Abspielgerät angeordnet.

Das erfindungsgemäße Verfahren umfasst dabei die nachfolgend dargestellten Verfahrensschritte.

Zunächst einmal erfolgt in einem ersten Verfahrenschritt anbieterseitig eine Bereitstellung von geographischen Datensätzen, insbesondere von digitalen Straßenkarten, sowie von Listen aus Zieladressen, auf einem Datenträger.

In der einfachsten Form kann es sich dabei um die Bereitstellung der geographischen Datensätze mittels eines mobilen Datenträgers handeln, wie beispielsweise mittels einer CD/DVD oder einer Flash-Speicherkarte (z.B. SD-Card), welche nutzerseitig durch eine geeignete Software vorzugsweise in der Navigationseinheit ausgelesen werden kann. Alternativ oder zusätzlich ist jedoch auch ein Online-Abruf der geographischen Datensätze von einem (Internet-)Server vorgesehen.

In einem weiteren Verfahrenschritt wird nutzerseitig mittels eines Clientsystems eine Anzahl der anbieterseitig bereitgestellten geographischen Datensätze und/oder Zieladressen von dem Datenträger - also von dem mobilen Datenträger oder dem Server - abgerufen.

In einem weiteren Verfahrenschritt erfolgt nun die Übertragung der abgerufenen geographischen Datensätze und/oder Zieladressen auf ein mobiles Multimedia-Abspielgerät. Nachfolgend wird eine Liste von Zieladressen auf dem Display des Multimedia-Abspielgeräts angezeigt.

Der Nutzer wählt sodann eine der angezeigten Zieladressen mittels der Bedienelemente des Multimedia-Abspielgeräts aus, und die ausgewählte Zieladresse wird von dem Multimedia-Abspielgerät an die Prozessoreinrichtung der Navigationseinrichtung übertragen.

Nachfolgend werden grafische, textliche und/oder akustische Routenführungsanweisungen von der Navigationssoftware erzeugt und schließlich mittels des Multimedia-Abspielgeräts wiedergegeben.

Das erfindungsgemäße Verfahren ermöglicht somit insbesondere ein schwerpunktmäßig dienstebasiertes Angebot von Navigationsleistungen, denn dank der erfindungsgemäßen Doppelnutzung des ohnehin vorhandenen bzw. erhältlichen Media Players als Bedienoberfläche und Ein- und Ausgabegerät für Zieladressen bzw. Navigationsanweisungen wird die zusätzlich erforderliche Hardware gegenüber den aus dem Stand der Technik bekannten Navigationsgeräten minimiert.

Dank des erfindungsgemäßen Verfahrens wird das Einsatzfeld für persönliche tragbare Media Player, und ggf. auch für die zugehörigen Online Services, synergistisch auf das Gebiet der Navigation erweitert. Dabei muss der Nutzer gleichzeitig jedoch kein weiteres Bedienkonzept erlernen, da die Bedienung auch der Navigation über die bekannte, vertraute Oberfläche des Media Players erfolgt.

Die Erfindung wird dabei zunächst einmal unabhängig davon verwirklicht, wo und auf welcher Art von Datenträger die anbieterseitige Datenbereitstellung im anfänglichen Verfahrenschritt erfolgt, solange der Datenträger ausreichende Kapazität aufweist und dem Nutzer zugänglich gemacht werden kann. Gemäß einer bevorzugten Ausführungsform des erfindungsgemäßen Verfahrens erfolgt die Bereitstellung der geographischen Datensätze bzw. Zieladressen jedoch auf einem Datenträger eines anbieterseitigen Computerservers mittels eines Zugangsservice.

Diese Ausführungsform bringt den maßgeblichen Vorteil mit sich, dass auf diese Weise ein ggf. bereits etablierter Service zum Abruf von Datensätzen, insbesondere ein Online-Service zum Abruf von Audio- bzw. Multimediadaten von einem anbieterseitigen Server, auf das zusätzliche, integrierte Daten- und Dienstleistungsangebot der Navigation ausgedehnt werden kann.

Für den Nutzer bietet dies den großen Vorteil, dass er somit nicht nur seinen Medienbedarf, sondern auch jederzeit aktuelle Navigationsdaten über den für ihn bereits bekannten oder gewohnten Online-Zugangsservice beziehen kann. Auf diese Weise kann ein anbieterseitig bereits vorhandener Online-Service mittels Integration der Navigationsangebote um erhebliche zusätzliche Wertschöpfungsmöglichkeiten ergänzt und erweitert werden.

Gemäß einer bevorzugten Ausführungsform der Erfindung erfolgt dabei im Verfahrenschritt b) der Abruf einer vom Nutzer definierbaren Menge an geographischen Datensätzen bzw. Zieladressen. Dies entspricht dem häufig bereits vertrauten Umgang des Nutzers mit dem Download von Multimedia-Dateien von einem anbieterseitigen Server. Es werden somit selektiv nur diejenigen Datensätze oder Listen von Zieladressen abgerufen, die für den Nutzer von Interesse sind bzw. von ihm benötigt werden.

Mit diesem Hintergrund ist gemäß weiterer bevorzugter Ausführungsformen des erfindungsgemäßen Verfahrens vorgesehen, dass Zugang zu und Abruf der geographischen Datensätze bzw. Zieladressen im Verfahrenschritt b) im Anschluss an eine persönliche Identifikation des Nutzers erfolgt, bzw. dass der Abruf der Datensätze oder Zieladressen in Abhängigkeit des abgerufenen Umfangs an Datensätzen kostenpflichtig ist.

Für den Nutzer kann dank der Nutzeridentifikation das Angebot an herunterladbaren Datensätzen somit vom Anbieter insbesondere permanent an die persönlichen Präferenzen des Nutzers angepasst werden, und es können dem Nutzer beispielsweise speziell auf seine Interessen zugeschnittene zusätzliche Inhalte beispielsweise über Freizeitangebote, Kultur oder Veranstaltungen zur Verfügung gestellt werden. Dabei kann der Anbieter dank der persönlichen Nutzeridentifikation und mittels kostenpflichtiger Inhalte gleichzeitig die Kundenbindung optimieren und die zum Betrieb des Services erforderlichen Umsätze generieren.

Nach einer weiteren Ausführungsform des erfindungsgemäßen Verfahrens ist auf dem Massenspeicher der Navigationseinrichtung - unabhängig vom Umfang der getätigten Downloads des Nutzers vom anbieterseitigen Datenträger bzw. Server - ein bestimmter Umfang an geographischen Datensätzen bzw. Zieladressen gespeichert. Dabei können vom Nutzer im Verfahrenschritt e) jedoch nur diejenigen der in der Navigationseinrichtung gespeicherten Datensätze bzw. Zieladressen ausgewählt bzw. zur Navigation verwendet werden, die zudem in einem kostenpflichtigen Download des Nutzers vom anbieterseitigen Datenträger oder Computerserver enthalten bzw. gelistet waren.

Auf diese Weise können geographische Daten für ein größeres Gebiet insbesondere bereits herstellerseitig auf der Navigationseinrichtung bzw. auf einem zugehörigen Massenspeicher wie beispielsweise auf einer Flash-Speicherkarte vorinstalliert sein, wobei vom Nutzer nur auf diejenigen geographischen Daten, Straßenkarten bzw. Listen von Zieladressen zugegriffen werden kann, für die er über den Online-Service die ggf. kostenpflichtigen Nutzungsrechte erworben hat. Dadurch wird ferner eine Minimierung der vom Nutzer herunterzuladenden Datenmenge ermöglicht, da im Wesentlichen nur Listen von Zieladressen und ggf. Updates für Straßenkarten und/oder Software heruntergeladen werden müssen, wobei jedoch der Großteil der Daten unabhängig von den Nutzungsrechten des Nutzers bereits auf dem Massenspeicher der Navigationseinrichtung vorhanden ist.

Gemäß einer weiteren bevorzugten Ausführungsform des erfindungsgemäßen Verfahrens ist dabei der Abruf der geographischen Datensätze bzw. Zieladressen im Verfahrenschritt b) in Abhängigkeit des tatsächlich genutzten Umfangs an Datensätzen kostenpflichtig. Diese Ausführungsform ist vorteilhaft insofern, als auf diese Weise Nutzungsgebühren nur für diejenigen geographischen Datensätze oder Listen von Zieladressen anfallen, die vom Nutzer tatsächlich zum Zweck der Navigation genutzt worden sind. Dies eröffnet für den Nutzer beispielsweise die Möglichkeit, im Sinne eines Reservevorrats zunächst einen größeren Umfang an geographischen Datensätzen oder Zieladressen vom Anbieter zu beziehen, wobei Nutzungsgebühren jedoch nur für den Umfang an Daten erhoben werden, die nicht nur heruntergeladen, sondern auch tatsächlich zur Navigation verwendet worden sind.

Nach einer weiteren Ausführungsform des erfindungsgemäßen Verfahrens erfolgt im Verfahrenschritt b) ferner ein Versionsnummernabgleich zwischen den auf dem nutzerseitigen Clientsystem und/oder auf dem mobilen Multimedia-Abspielgerät gespeicherten geographischen Datensätzen, Zieladressenlisten bzw. Navigationssoftwareversionen mit der anbieterseitig jeweils vorhandenen Version der Datensätze, Zieladressenlisten bzw. der Navigationssoftware. Dabei erfolgt ggf. ein Update der nutzerseitig vorhandenen Daten bzw. Softwareversionen auf die anbieterseitig jeweils vorhandenen neuesten Versionen.

Auf diese Weise können die nutzerseitig vorhandene Navigationssoftware bzw. die nutzerseitig gespeicherten Navigationsdaten, Zieladressenlisten oder Straßenkarten - nach entsprechender Nutzerbestätigung oder automatisch - jeweils auf den neusten Stand gebracht werden. Dies ist vorteilhaft und von Bedeutung insbesondere bei Ausführungsformen der Erfindung, die eine bedarfsweise Onlineverbindung zu einem Datenträger auf einem anbieterseitigen Server umfassen.

Nach einer weiteren bevorzugten Ausführungsform des erfindungsgemä-ßen Verfahrens ist das nutzerseitige Clientsystem durch einen Personal Computer des Nutzers gebildet. Dabei erfolgen Abruf und Übertragung der geographischen Datensätze bzw. Zieladressen in den Verfahrensschritten b) und c) mittels des Personal Computer. Diese Ausführungsform ist vorteilhaft insofern, als der Personal Computer einen der etablierten Zugangswege für Online-Services, insbesondere für Musik- oder Multimedia-Download-Services darstellt. Derartige Services können somit auf einfache und für den Nutzer transparente Weise auch auf Navigationsinhalte erweitert werden. Ferner kann die Speicherung der Navigationsinhalte ebenso wie bei den Multimedia-Inhalten temporär oder permanent auf dem Personal Computer des Nutzers erfolgen. Teilmengen der vom Nutzer heruntergeladenen Navigationsinhalte können bedarfsweise - wie dies auch bei Multimedia-Inhalten gebräuchlich ist - insbesondere zur mobilen Nutzung auf Reisen vom Personal Computer des Nutzers auf die Negationseinheit bzw. auf den Mediaplayer übertragen werden.

Gemäß einer alternativen Ausführungsform des erfindungsgemäßen Verfahrens ist das nutzerseitigen Clientsystem durch die Navigationseinheit gebildet. Dabei erfolgen Abruf und Übertragung der geographischen Datensätze bzw. Zieladressen in den Verfahrensschritten b) und c) mittels der Navigationseinheit. Diese Ausführungsform ist insbesondere vorteilhaft und von Bedeutung für den Fall einer weitestgehend eigenständigen Navigationseinheit, die beispielsweise als Navigationszubehörteil für einen bestehenden Mediaplayer ausgebildet sein kann. In diesem Fall kann der Abruf der Datensätze bzw. Zieladressen und die Übertragung auf den Massenspeicher der Navigationseinheit bzw. des Media Players insbesondere von einer anbieterseitig bereitgestellten Flash-Speicherkarte erfolgen, die hierzu in einen entsprechenden Slot der Navigationseinheit eingeführt wird.

Eine besonders bevorzugte Ausführungsform des erfindungsgemäßen Verfahrens sieht vor, dass die geographischen Datensätze bzw. Zieladressen anbieterseitig in ein Playlisten-Format des Multimedia-Abspielgeräts gewandelt und auf dem Datenträger abgelegt sind. Dabei werden die Datensätze bzw. Zieladressen im Verfahrenschritt d) im Playlisten-Format auf dem Display des Multimedia-Abspielgeräts angezeigt.

Diese Ausführungsform ist besonders vorteilhaft aufgrund der damit ermöglichten Minimierung erforderlicher Änderungen an Hardware bzw. Software des Media Players, wenn dieser die Verwandlung in ein Navigationssystem erfahren soll. Denn dank der Konvertierung der geographischen Datensätze bzw. Zieladressen in das übliche Playlisten-Format des Media Players können die geographischen Datensätze bzw. Zieladressen nun ohne weiteres auf dem Mediaplayer angezeigt und in der vom Nutzer gewohnten Weise über die Bedienelemente des Media Players durchsucht bzw. ausgewählt werden.

Gemäß einer weiteren besonders bevorzugten Ausführungsform des erfindungsgemäßen Verfahrens erfolgt die Erzeugung der grafischen Routenführungsanweisungen im Verfahrenschritt g) in einem zum Ausgabegrafikformat des Multimedia-Abspielgeräts kompatiblen Grafikformat.

Auch diese Ausführungsform steht im Dienst einer optimalen Kompatibilität des erfindungsgemäßen Verfahrens zu weitestgehend unveränderter Hardware bzw. Software des Media Players. Da auf diese Weise im Wesentlichen die bereits vorhandenen Routinen des Media Players verwendet werden können, ergibt sich ferner eine Minimierung der für die zusätzliche Navigationsfunktion etwa erforderlichen Prozessorleistung des Media Players.

Eine weitere Ausführungsform der Erfindung schließlich sieht vor, dass im Verfahrenschritt a) der Abruf von zusätzlichen geographisch verknüpften Inhalten erfolgt. Diese zusätzlichen Inhalte können insbesondere Informationen über Sehenswürdigkeiten, aktuelle Veranstaltungen und andere kulturelle bzw. auf die Interessen des Nutzers bezogene Inhalte umfassen.

Diese Ausführungsform ist besonders vorteilhaft insofern, als ein bislang auf reine Medienwiedergabe beschränkter Media Player auf diese Weise zu einer gebündelten Schnittstelle von medialer Unterhaltung, Navigation und geographisch bezogener kultureller Aktivität werden kann.

Im Folgenden wird die Erfindung anhand lediglich Ausführungsbeispiele darstellender Zeichnungen näher erläutert.

Es zeigt
- **Fig. 1**: in schematisierter Darstellung ein Ausführungsbeispiel für eine Navigationseinrichtung gemäß der vorliegenden Erfindung mit Navigationseinheit und Media Player;
- **Fig. 2**: in schematischer Diagrammdarstellung eine Anordnung von Komponenten der Navigationseinrichtung gemäß **Fig. 1** sowie eines Kraftfahrzeugs;
- **Fig. 3**: in einer **Fig. 2** entsprechenden Darstellung die Komponentenanordnung gemäß **Fig. 2** mit einer Variante der Audioübertragung;
- **Fig. 4**: in einer **Fig. 2** und **3** entsprechenden Darstellung die Komponentenanordnung gemäß **Fig. 2** und **3** mit einer weiteren Variante der Audioübertragung;
- **Fig. 5**: in einer **Fig. 2** bis **4** entsprechenden Darstellung die Komponentenanordnung gemäß **Fig. 2** bis **4** mit einem Beispiel der Übertragung von Sensorsignalen zwischen Fahrzeug und Navigationseinrichtung;
- **Fig. 6**: in einer **Fig. 2** bis **5** entsprechenden Darstellung die Komponentenanordnung gemäß **Fig. 2** bis **5** mit einem Beispiel der Ausgabe von Navigationsanweisungen über das Kraftfahrzeug;
- **Fig. 7**: in schematisierter Ablaufdarstellung ein Ausführungsbeispiel für das erfindungsgemäße Verfahren zur Ausgabe von Navigationsanweisungen, hier dargestellt die grundlegende Nutzerbedienung;
- **Fig. 8**: in einer **Fig. 7** entsprechenden Ablaufdarstellung die Verfahrensschritte beim Datenbankupdate eines Ausführungsbeispiels eines erfindungsgemäßen Verfahrens zur Ausgabe von Navigationsanweisungen;
- **Fig. 9**: in einer **Fig. 7** und **8** entsprechenden Ablaufdarstellung die Verfahrensschritte zur Zieleingabe über den Media Player bei einem Ausführungsbeispiel eines erfindungsgemäßen Verfahrens zur Ausgabe von Navigationsanweisungen;
- **Fig. 10**: In einer **Fig. 7** bis **9** entsprechenden Ablaufdarstellung die Verfahrensschritte bei der Unterbrechung der Routenführung, bzw. bei der Umschaltung auf die Medienwiedergabe, bei einem Ausführungsbeispiel eines erfindungsgemäßen Verfahrens zur Ausgabe von Navigations-anweisungen;
- **Fig. 11**: in einer **Fig. 7** bis **10** entsprechenden Ablaufdarstellung die Verfahrensschritte der Routenberechnung und der Ausgabe der Routenführungsanweisungen bei einem Ausführungsbeispiel eines erfindungsgemäßen Verfahrens zur Ausgabe von Navigationsanweisungen;
- **Fig. 12**: in einer schematisiert dargestellten Anordnung von Komponenten eine Variante des Ablaufs eines Online-Update bei einer Ausführungsform der erfindungsgemäßen Navigationseinrichtung;
- **Fig. 13**: in einer **Fig. 12** entsprechenden Darstellung die Komponentenanordnung gemäß **Fig. 12** bei einer weiteren Variante des Ablaufs eines Online-Update; und
- **Fig. 14**: in einer schematisiert dargestellten Anordnung die zur Routenberechnung eingesetzten Komponenten einer Ausführungsform einer erfindungsgemäßen Navigationseinrichtung;
- **Fig. 15**: in einer schematischen Ansicht den Media Player für eine Ausführungsform einer Navigationseinrichtung gemäß der vorliegenden Erfindung bei der Auswahl aus verschiedenen Reiseziellisten;
- **Fig. 16**: in einer **Fig. 15** entsprechenden Darstellung und Ansicht den Media Player einer alternativen Ausführungsform einer Navigationseinrichtung gemäß der vorliegenden Erfindung bei der Auswahl zwischen verschiedenen Nutzungsmöglichkeiten des Media Players;
- **Fig. 17**: in einer **Fig. 15** und **16** entsprechenden Darstellung und Ansicht den Media Player gemäß **Fig. 15** oder **Fig. 16** bei der Länderauswahl im Rahmen der Zieleingabe;
- **Fig. 18**: in einer **Fig. 15** bis **17** entsprechenden Darstellung und Ansicht den Media Player gemäß **Fig. 17** bei der Auswahl der Stadt im Rahmen der Zieleingabe;
- **Fig. 19**: in einer **Fig. 15** bis **18** entsprechenden Darstellung und Ansicht den Media Player gemäß **Fig. 17** und **18** bei der Auswahl der Straße im Rahmen der Zieleingabe; und
- **Fig. 20**: in einer **Fig. 15** bis **19** entsprechenden Darstellung und Ansicht den Media Player gemäß **Fig. 17** bis **19** bei der Auswahl der Hausnummer im Rahmen der Zieleingabe.

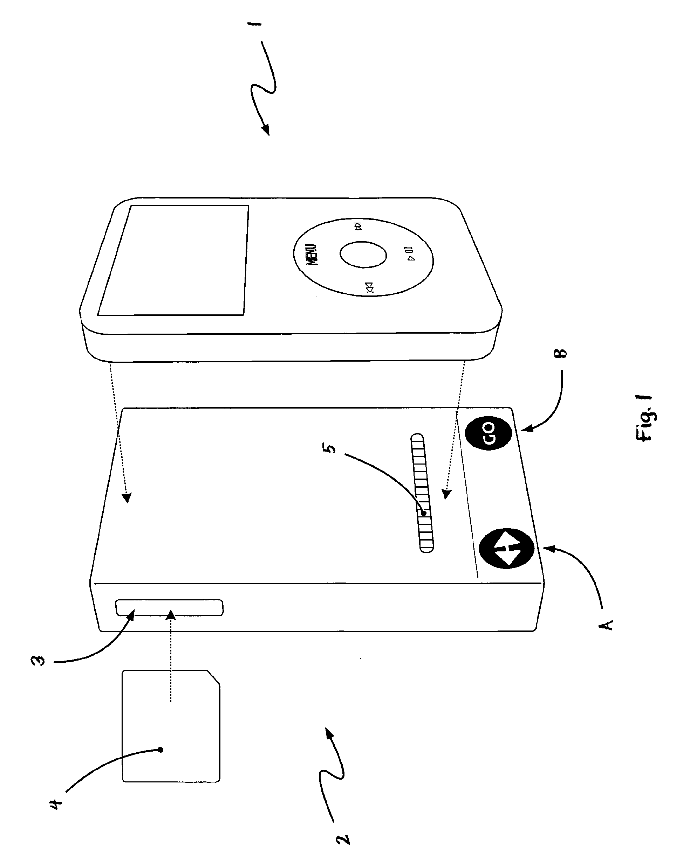

**Fig. 1** zeigt in höchst schematischer Weise eine Ausführungsform einer Navigationseinrichtung gemäß der vorliegenden Erfindung.

Man erkennt zunächst einmal einen Media Player 1 sowie eine Navigationseinheit 2 mit Speicherkartenleser 3 und mit einer zugehörigen Speicherkarte 4. Dabei weist die Navigationseinheit 2 eine mit der Standardschnittstelle des Media Players 1 verbindbare Schnittstelle 5 sowie beim dargestellten Ausführungsbeispiel zwei Betätigungstasten "A" und "B" auf.

Die Navigationseinheit 2 ist beispielsweise zur Anbringung im Kraftfahrzeug vorgesehen, kann aber auch als portables Gerät in Taschengröße ausgebildet sein. Erfindungsgemäß dient die Navigationseinheit 2 insbesondere der Ergänzung eines bereits vorhandenen bzw. handelsüblichen Media Players 1, um auf diese Weise mittels des Media Players 1 nicht nur auf Multimedia wie Musik oder Videos zugreifen zu können, sondern um den Media Player 1 einschließlich seiner Bedienoberfläche und seiner Betätigungselemente zusätzlich auch als Navigationsgerät nutzen zu können.

Um zunächst einmal ohne oder lediglich mit minimalen Änderungen an Software und/oder Hardware des Media Players 1 auszukommen, ist die Navigationseinheit 2 gemäß dem abgebildeten Ausführungsbeispiel mit einem eigenen Massenspeicher in Form des Kartenlesers 3 und der darin aufnehmbaren Speicherkarte 4 ausgestattet. Dies erlaubt die Aufnahme umfangreicher Navigationsdatenbanken, Reiseziellisten und digitalisierter Straßenkarten in die Navigationseinrichtung auch dann, wenn der Massenspeicher des Media Players 1 hierzu mangels Kompatibilität oder aufgrund zu geringer Größe nicht geeignet sein sollte.

Die einzelnen Komponenten der Navigationseinrichtung, insbesondere der zur Routenberechnung herangezogene Prozessor und Arbeitsspeicher, der Massenspeicher mit den navigationsbezogenen Datenbanken, die Navigationssoftware und die Tonausgabeeinrichtung können dabei in unterschiedlicher Weise auf Media Player 1 und Navigationseinheit 2 verteilt sein. Um beispielsweise einen vorhandenen oder handelsüblichen Media Player 1 praktisch ohne Modifikationen auch zu Navigationszwecken einsetzen zu können, können alle genannten Komponenten in der Navigationseinheit 2 angeordnet sein.

Die in **Fig. 1** dargestellte Ausführungsform der erfindungsgemäßen Navigationseinrichtung zeichnet sich somit insbesondere dadurch aus, dass sie zusammen mit einem handelsüblichen Media Player 1 verwendet werden kann, womit der Media Player 1 lediglich als Eingabe-Benutzerschnittstelle zur Auswahl und Eingabe des gewünschten Reiseziels, sowie als Ausgabegerät für grafische und ggf. akustische Navigationsanweisungen dient. Sämtliche navigationsbezogenen Berechnungsschritte und Datenbewegungen werden hingegen komplett in der Navigationseinheit 2 durchgeführt.

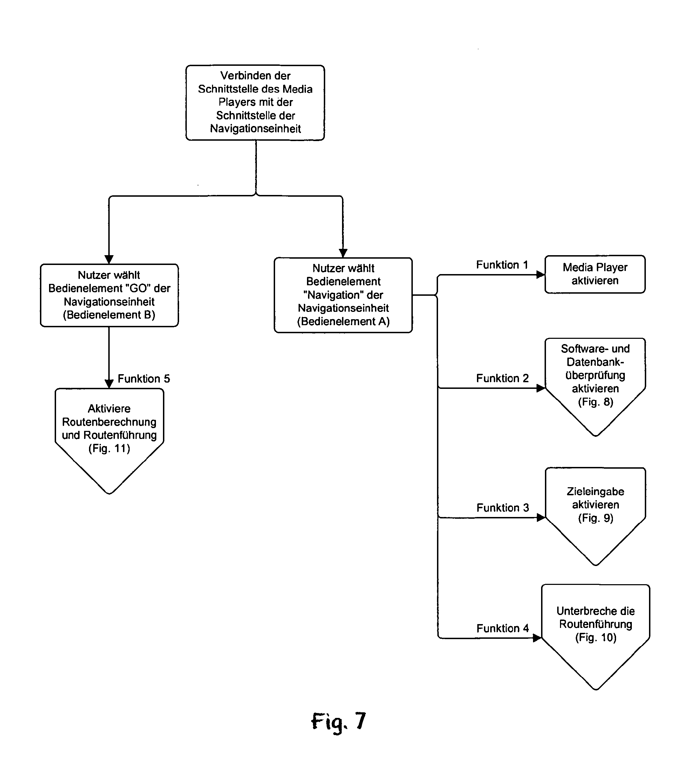

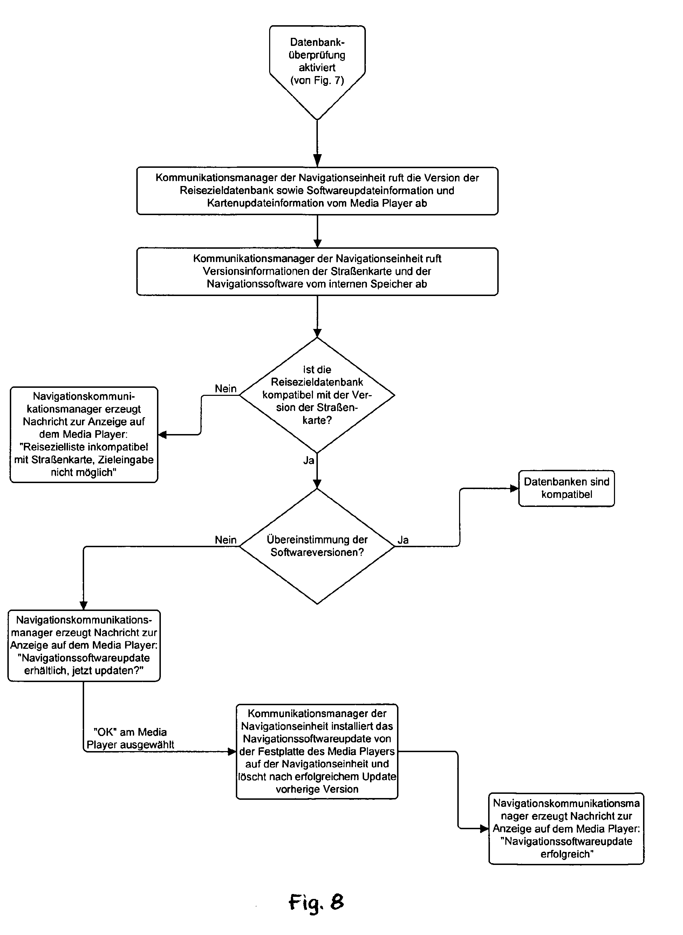

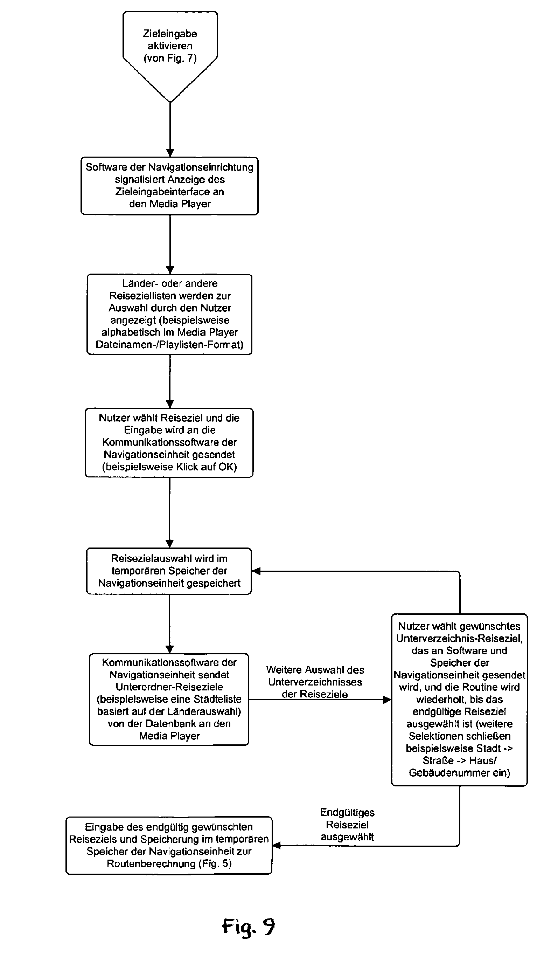

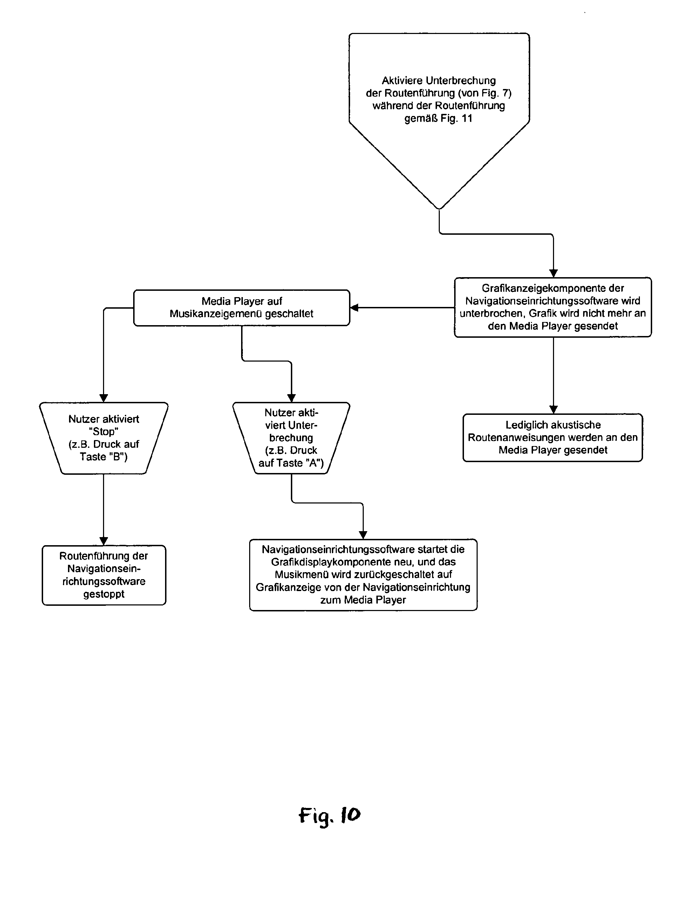

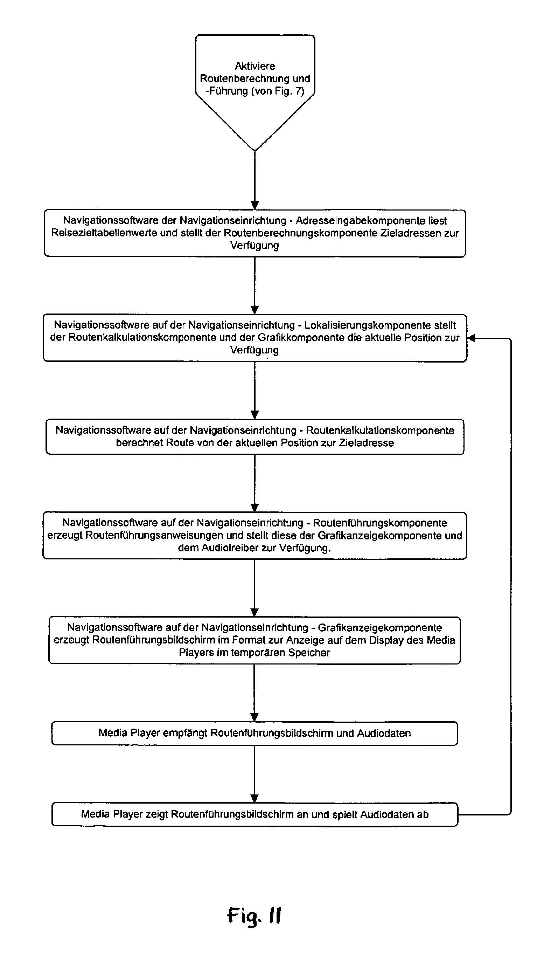

Da der handelsübliche, nicht modifizierte Media Player 1 keine eigenen Bedienelemente zur Aktivierung der Navigationsfunktionen, bzw. zur Umschaltung vom Medien-Abspielbetrieb auf den Navigationsbetrieb aufweist, ist die Navigationseinheit 2 gemäß **Fig. 1** mit den beiden Bedienelementen "A" und "B" ausgestattet. Dabei dient die Taste "A"der Umschaltung zwischen Navigationsfunktion und Medien-Abspielbetrieb, wohingegen die Taste "B" die Navigationsberechnungen startet, nachdem das gewünschte Reiseziel über die Bedienoberfläche des Media Players 1 eingegeben wurde. Die entsprechenden Abläufe hierzu sind in ausführlicher Form in den **Fig. 7** bis **11** dargestellt.

Bei anderen Ausführungsformen der erfindungsgemäßen Navigationseinrichtung können jedoch auch mehrere oder alle der oben genannten Komponenten der Navigationseinrichtung nicht in der Navigationseinheit 2, sondern in einem (ggf. modifizierten) Media Player 1 angeordnet sein.

So ist es bei einer alternativen Ausführungsform der Erfindung beispielsweise vorgesehen, zur Ausführung der Navigationsberechnungen und zur Speicherung der navigationsbezogenen Datenbanken den Prozessor, den Arbeitsspeicher und den Massenspeicher des Media Players 1 mit heranzuziehen, und ebenso die Tonausgabe der akustischen Routenführungsanweisungen über eine entsprechende Audioausgabeeinrichtung des Media Players 1 abzuwickeln. In diesem Fall könnten zusätzliche Bedienelemente wie insbesondere die Tasten "A" und "B" an der Navigationseinheit 2 entfallen.

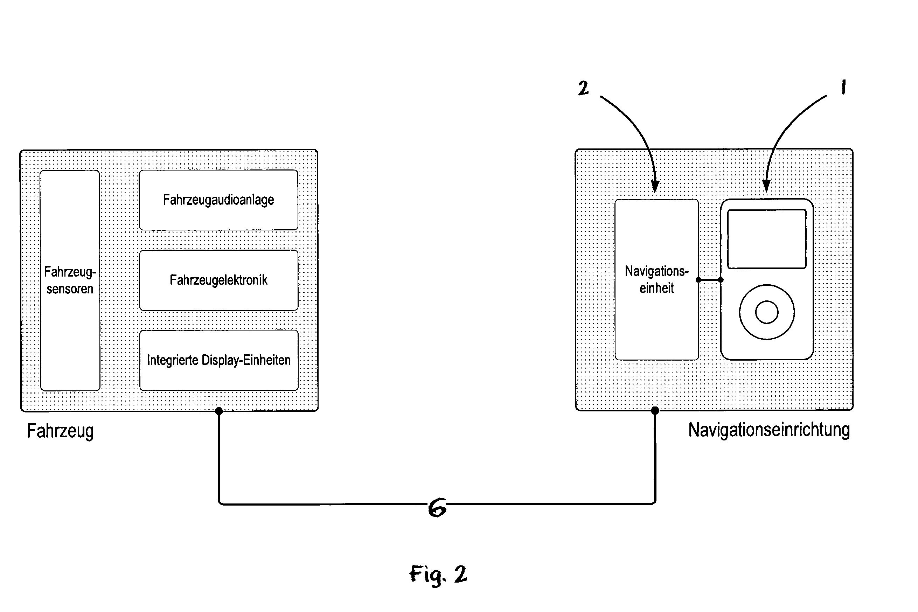

**Fig. 2** zeigt in einer schematischen Diagrammdarstellung die Grundkomponenten der Navigationseinrichtung gemäß **Fig. 1** (zeichnungsbezogen rechts) sowie weitere im Umfeld der Navigation ggf. einsetzbare, in einem Kraftfahrzeug angeordnete Komponenten (zeichnungsbezogen links).

Man erkennt wieder, dass die Navigationseinrichtung aus der Navigationseinheit 2 und dem mit der Navigationseinheit 2 verbindbaren Media Player 1 besteht, wobei der Media Player 1 insbesondere die Nutzer-Bedienoberfläche für die Navigationsfunktionen bildet.

Beim dargestellten Ausführungsbeispiel gemäß **Fig. 2** ist zunächst einmal die mechanische Verbindung 6 zwischen dem Kraftfahrzeug und der Navigationseinrichtung symbolisiert. Die Verbindung 6 kann beispielsweise in der Form gebildet sein, dass die Navigationseinheit 2 selbst vorübergehend oder permanent insbesondere im Bereich des Armaturenbretts des Kraftfahrzeugs angebracht wird und somit eine Halterung für den Media Player 1 bildet.

Der Media Player 1 kann vom Nutzer somit unterwegs stets beispielsweise in der Tasche mitgeführt und in der üblichen Weise benutzt werden. Zum Einsatz im Kraftfahrzeug, insbesondere zum Zweck der Bedienung der Navigationseinrichtung im Kraftfahrzeug, kann der Media Player 1 dann auf der im Fahrzeug angebrachten Navigationseinheit 2 eingerastet werden, wobei gleichzeitig eine mechanische wie auch mittels der Schnittstelle 5 des Media Players 1 eine elektrische Verbindung zwischen Navigationseinheit 2 und Media Player 1 hergestellt wird.

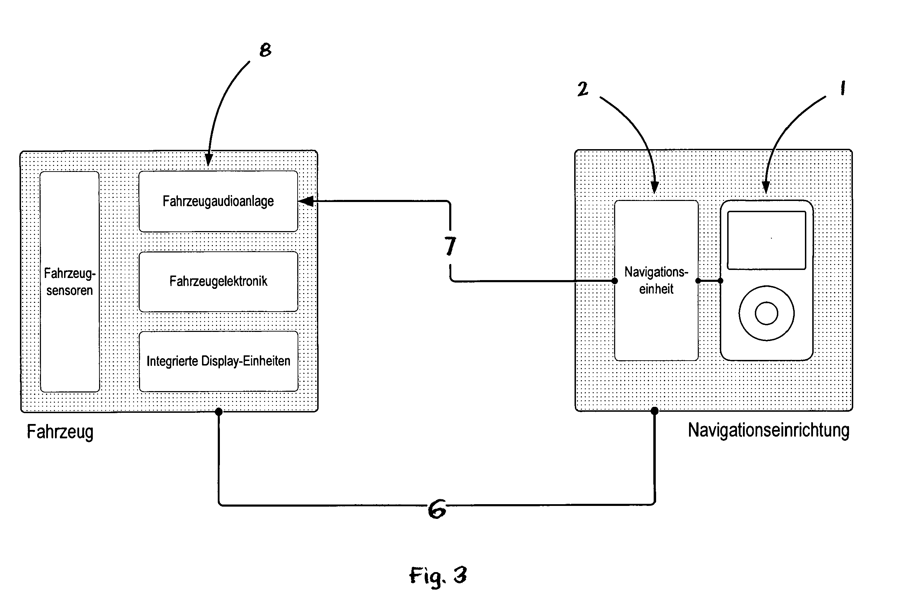

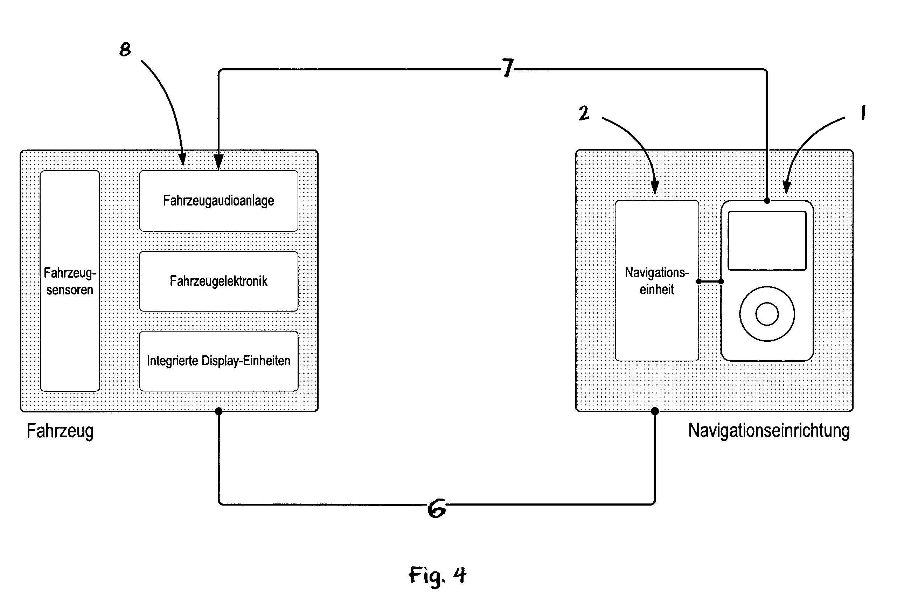

In den **Fig. 3** und **4** sind zwei unterschiedliche Varianten der Audioausgabe 7 bei einer erfindungsgemäßen Navigationseinrichtung dargestellt. Bei dem Ausführungsbeispiel gemäß **Fig. 3** erfolgt die Ausgabe 7 der gesprochenen Navigationsanweisungen, die in der Navigationseinrichtung erzeugt werden, über eine direkte Verbindung zwischen der Navigationseinheit 2 und der Audioanlage 7 des Kraftfahrzeugs. Bei dem Ausführungsbeispiel gemäß **Fig. 4** hingegen werden die gesprochenen Navigationsanweisungen über den vorhandenen Verstärker und den Audioausgang des Media Players 1 geleitet, und gehen von dort an die Audioanlage 8 des Kraftfahrzeugs, beispielsweise also an ein im Fahrzeug vorhandenes Autoradio bzw. an die Kraftfahrzeuglautsprecher. Hierbei ist es vorgesehen, dass die vom Media Player 1 ausgegebenen Audiosignale, vornehmlich Musik, ebenfalls an die Audioanlage 8 gesendet werden. Dabei werden vorzugsweise Audiomanagement- bzw. Priorisierungsmanagementfunktionen eingesetzt, mit denen das sanfte Umschalten zwischen Medienausgabe und Ausgabe von Navigationsanweisungen erfolgen kann. Ebenso kann eine Vorrangschaltung in Bezug auf den Typ des Audio-Ausgabesignals erfolgen. Dies kommt insbesondere dann in Betracht, wenn der Mediaplayer zusätzlich mit einer Radiofunktion ausgestattet ist, mit welcher z.B. Verkehrsnachrichten erkannt werden können.

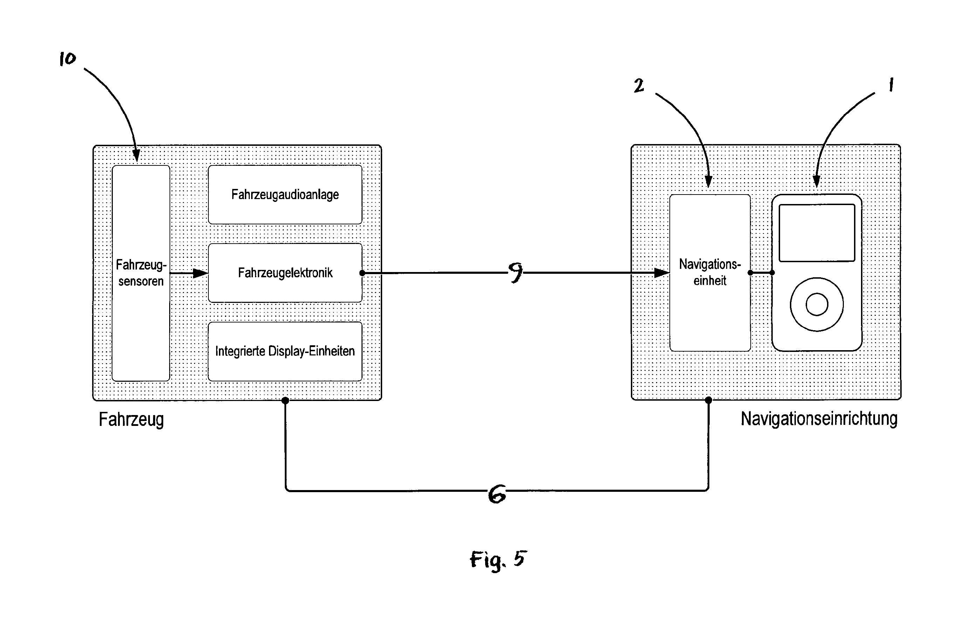

In **Fig. 5** ist dargestellt, auf welche Weise eine erfindungsgemäße Navigationseinrichtung mittels einer Datenverbindung 9 auf die im Kraftfahrzeug ggf. vorhandenen Sensoren 10 - zum Zweck der Unterstützung der Navigationsfunktion - zugreifen kann. Bei den Kraftfahrzeugsensoren 10 kann sich dabei insbesondere um GPS-Empfänger, Lenkwinkelsensoren, Magnetfeldsensoren und/oder um einen Tachoabgriff handeln. Diese Ausführungsform erhöht die Genauigkeit der Navigation, ermöglicht einen modularen Aufbau und vermeidet, dass im Fahrzeug ggf. bereits vorhandene Sensorik zusätzlich nochmals in der Navigationseinrichtung vorgesehen werden muss.

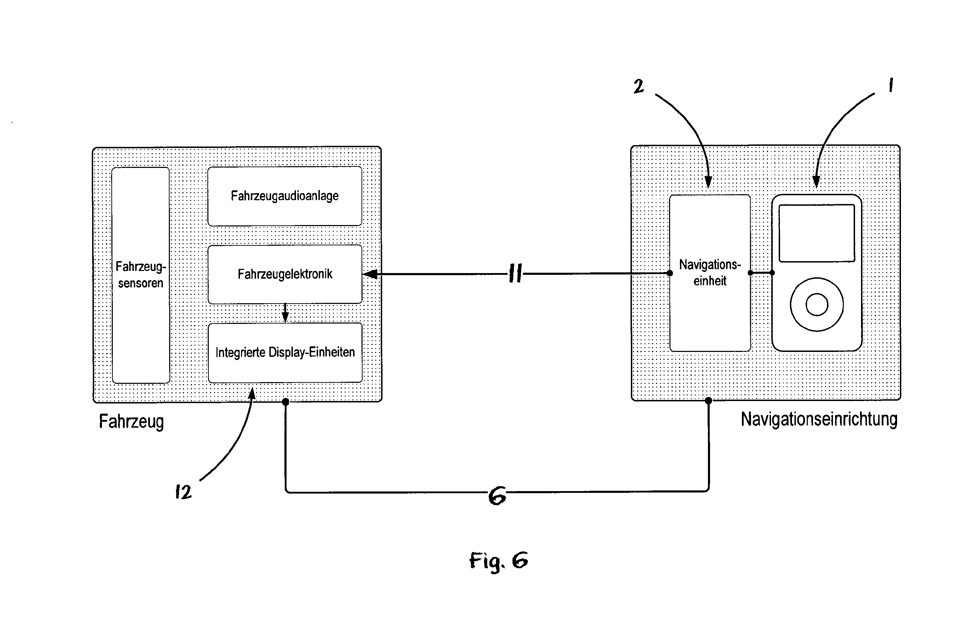

Das in **Fig. 6** dargestellte Ausführungsbeispiel zeigt, dass - neben der Ausgabemöglichkeit für grafische Routenführungsanweisungen auf dem Display des Media Players 1 - zusätzlich oder alternativ auch eine Ausgabe 11 von grafischen Routenführungsanweisungen über im Fahrzeug bereits vorhandene Displayeinheiten 12 erfolgen kann. Hierbei kann es sich beispielsweise um im Fahrzeug eingebaute TFT-Bildschirme oder um Punktmatrixanzeigen im Kombiinstrument des Kraftfahrzeugs handeln.

**Fig. 7** zeigt eine schematisierte Darstellung des Ablaufs bei der Bedienung der Navigationseinrichtung gemäß **Fig. 1** durch den Nutzer.

Der dargestellte Ablauf bezieht sich auf eine Navigationseinrichtung mit einem handelsüblichen, nicht modifizierten Media Player 1, so dass die zugehörige Navigationseinheit 2 entsprechend der Darstellung in **Fig. 1** mit den beiden Bedienelementen "A" und "B" ausgestattet ist.

Zunächst verbindet der Nutzer den Media Player 1 mit der Navigationseinheit 2, indem der Media Player 1 auf das zur Schnittstelle des Media Players 1 kompatible Gegenstück an der Navigationseinheit 2 aufgesteckt wird, vgl. **Fig. 1.**

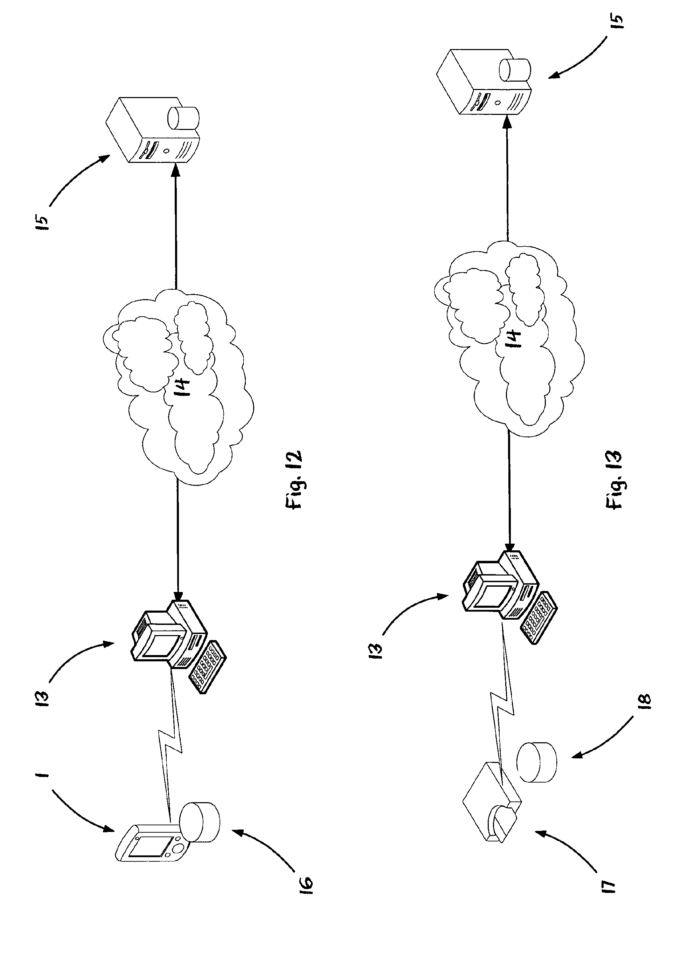

Gemäß dem rechten Ast des in **Fig. 7** dargestellten Ablaufs wählt der Nutzer zum anschließenden Start der Zieleingabe über den Media Player 1 zunächst das Bedienelement "A". Mittels Bedienelement "A" wird der Media Player 1 über die Schnittstelle 5 aktiviert (Funktion 1 in **Fig. 7),** und die Navigationseinheit 2 wird in den Zieleingabemodus geschaltet (Funktion 3 in **Fig. 7).** Vor der eigentlichen Zieleingabe kann ferner eine Überprüfung der Navigationssoftware und der Navigationsdatenbanken auf Aktualität erfolgen (Funktion 2 in **Fig. 7).** Letzteres ist in ausführlicherer Form in **Fig. 8** dargestellt.

Falls bei der Betätigung des Bedienelements "A" durch den Nutzer bereits eine früher eingeleitete Routenführung aktiv gewesen sein sollte, so führt in diesem Fall die Betätigung des Bedienelements "A" zu einer Unterbrechung der aktuellen Routenführung (Funktion 4 in **Fig. 7).** Anschließend kann entweder eine Umschaltung auf Medien- oder Musikabspielbetrieb über den Media Player 1 erfolgen, während die aktuelle Navigation im Hintergrund weiter abgearbeitet wird, oder aber die aktuelle Navigation kann komplett gestoppt werden. Ausführlich ist dies wiederum in **Fig. 10** dargestellt.

Nachdem somit der Media Player 1 durch die Navigationseinheit 2 aktiviert wurde (Funktion 1 in **Fig. 7),** werden von der Navigationseinheit 2 die Reiseziellisten in Form von Playlisten an das Display des Media Players 1 gesendet (Funktion 3), was in ausführlicher Form in **Fig. 9** dargestellt ist.

Im Anschluss an die erfolgte Zieleingabe durch den Nutzer über die Bedienoberfläche und das Display des Media Players 1 (Funktion 3 in **Fig. 7,** vgl. **Fig. 9)** wählt der Nutzer das Bedienelement "B" an der Navigationseinheit 2, vgl. linker Ast der Ablaufdarstellung in **Fig. 7.** Infolgedessen wird das zuvor am Media Player 1 gewählte Reiseziel (Funktion 3) in die Navigationseinheit 2 übernommen, und Routenberechnung und Routenführung werden initialisiert (Funktion 5 in **Fig. 7).** Die zugehörigen Abläufe bei Routenberechnung und Routenführung wiederum sind ausführlich in **Fig. 11** dargestellt.

**Fig. 8** zeigt den Ablauf der Überprüfung der Datenbanken auf Aktualität (vgl. Funktion 2 in **Fig. 7).**

**Fig. 8** bezieht sich dabei auf eine Ausführungsform der Navigationseinrichtung, bei der auf dem im Media Player 1 eingebauten Massenspeicher die jeweils aktuelle Version der Reisezieldatenbank, ferner Versionsangaben und/oder Updates der Navigationssoftware sowie die Versionsnummer der aktuellen Straßenkarten gespeichert werden können. Dies kann beispielsweise dadurch erfolgen, dass der Nutzer mit Media Player 1 und/oder Personal Computer 13 eine Verbindung zu einem Online-Service des Navigationsanbieters herstellt und die entsprechenden Versionsinformationen bzw. Updates abruft (vgl. hierzu ausführlich **Fig. 12** und **13).**

Die Straßenkarten selbst sowie die Navigationssoftware sind bei dem **Fig. 8** zugrundeliegenden Ausführungsbeispiel - insbesondere aus Platzgründen - nicht auf dem Massenspeicher des Media Players 1, sondern auf der Speicherkarte der Navigationseinheit 2 gespeichert. Wahlweise ist auch eine Aufteilung von Navigationssoftware und Kartendaten zwischen den Massenspeichern des Media Players 1 und der Navigationseinheit 2 möglich.

Zur Durchführung des Update wird gemäß **Fig. 8 -** im Anschluss an die Aktivierung der Datenbanküberprüfung, vgl. Funktion 2 in **Fig. 7 -** zunächst vom Kommunikationsmanager der Navigationseinheit 2 die Versionsnummer der Reisezieldatenbank, der Navigationssoftware sowie der Straßenkarte vom Speicher des Media Player 1 abgerufen, und in einem weiteren Schritt mit den auf dem Massenspeicher der Navigationseinheit 2 vorhandenen Versionen der Straßenkarte und der Navigationssoftware verglichen.

Ergibt sich dabei anhand des Vergleichs der Versionsnummern der aktuellen Reisezieldatenbank auf dem Media Player 1 und der auf der Navigationseinheit 2 gespeicherten Straßenkarte, dass die aktuelle Reisezieldatenbank mit der vorhandenen Straßenkarte inkompatibel ist, dann wird eine entsprechende Meldung auf der Anzeige des Media Players 1 ausgegeben. Um die aktuelle Reisezieldatenbank zusammen mit der Straßenkarte nutzen zu können, ist in diesem Fall zunächst ein Update der auf der Speicherkarte der Navigationseinheit 2 gespeicherten Straßenkarte erforderlich, siehe hierzu **Fig. 13.**

Falls die Reisezieldatenbank sich als kompatibel mit der Straßenkarte erweist, wird anschließend überprüft, ob in der Navigationseinheit 2 bereits die aktuelle Version der Navigationssoftware vorhanden ist. Ist dies der Fall, so sind alle relevanten Datenbanken sowie die Software kompatibel, und die Datenbanküberprüfung ist beendet. Falls die Versionsnummer der in der Navigationseinheit 2 vorhandenen Navigationssoftware jedoch nicht mit der auf dem Media Player 1 gespeicherten Versionsnummer übereinstimmt, so wird eine Nachricht auf dem Media Player 1 angezeigt, nach der der Nutzer ein entsprechendes Softwareupdate in Gang setzen kann.

Falls die Frage nach dem Softwareupdate vom Nutzer bestätigt wird (beispielsweise durch Betätigen eines entsprechenden Bedienelements am Media Player 1, bei anderen Ausführungsformen durch Drücken auf die Taste "B" der Navigationseinheit 2), so werden die entsprechenden, auf dem Massenspeicher des Media Players 1 vorhandenen Softwareupdates auf die Navigationseinheit 2 übertragen. Falls das Update erfolgreich verlaufen ist, wird die vorherige Version der Navigationssoftware vom Massenspeicher der Navigationseinheit 2 gelöscht, und eine entsprechende Update-Bestätigung wird auf dem Display des Media Players 1 angezeigt, wonach die Datenbanküberprüfung ebenfalls beendet ist.

In **Fig. 9** sind die Verfahrensschritte zur Zieleingabe dargestellt (Funktion 3 gemäß **Fig. 7),** wobei die Zieleingabe über die Bedienelemente des Media Players 1 erfolgt.

Nach der Aktivierung der Zieleingabe erzeugt die Software der Navigationseinrichtung zunächst eine grafische Anzeige des entsprechenden Zieleingabeinterface und sendet diese Anzeigedarstellung an das Display des Media Players 1.

Das Zieleingabeinterface umfasst dabei insbesondere Länder-, Städte- oder Straßenlisten - bzw. andere Listen von Reisezielen wie beispielsweise Points of Interest u.dgl. - die in Form üblicher Playlisten auf dem Display des Media Players 1 angezeigt werden.

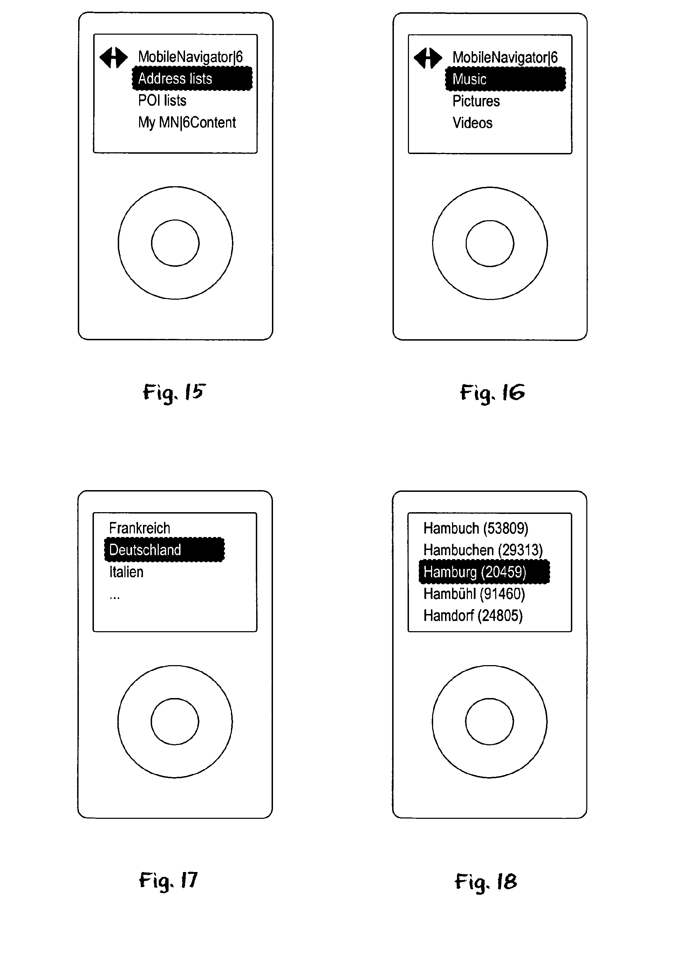

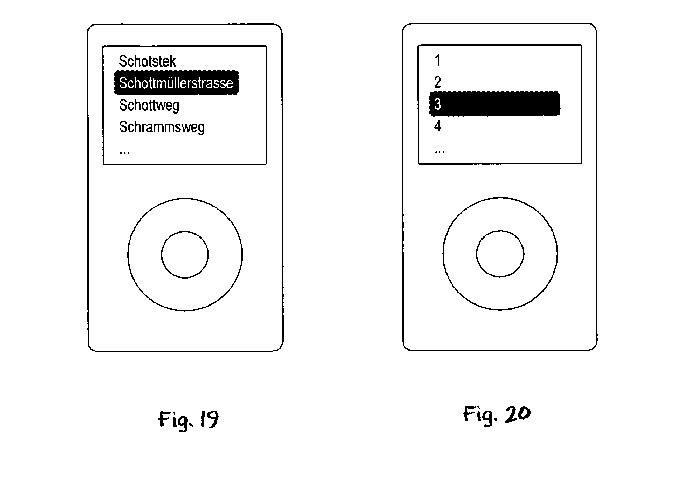

Anschließend wählt der Nutzer in der von der Handhabung seiner Musik-Playlisten gewohnten Weise das gewünschte Reiseziel durch Betätigung der entsprechenden Bedienelemente des Media Players 1. Ausführlich ist die Auswahl des Reiseziels mittels Playlistendarstellung in den **Fig. 15** bis **20** dargestellt.

Nach der Auswahl des gewünschten Reiseziels wird die Reisezieleingabe gemäß **Fig. 9** an die Kommunikationssoftware der Navigationseinheit 2 gesendet.

In Fig. 10 ist der Verfahrensablauf für den Fall der Unterbrechung der Routenführung, bzw. für den Fall der Umschaltung auf Medienwiedergabe dargestellt (Funktion 4 gemäß **Fig. 7).**

Falls der Nutzer gemäß **Fig. 7** während einer laufenden Navigation das Bedienelement "A" an der Navigationseinheit 2 betätigt, so wird dies als Anforderung zur Unterbrechung der Navigation interpretiert, und der Ablauf gemäß **Fig. 10** wird gestartet.

Zunächst wird durch die Navigationseinheit 2 die grafische Ausgabe von Routenführungsanweisungen über das Display des Media Players 1 gestoppt, und es werden lediglich die akustischen Routenführungsanweisungen der laufenden Navigation weiterhin an den Media Player 1 bzw. an die Fahrzeuglautsprecher 8 gesendet. Dies bedeutet mit anderen Worten, dass die eigentliche Navigation durch die Navigationseinheit 2 im Hintergrund zunächst weiter ausgeführt wird, und dass weiterhin akustische Routenführungsanweisungen ausgegeben werden.

Anschliessend wird der Media Player 1 auf Medienanzeige umgeschaltet, und der Nutzer kann in der gewohnten Weise Medien, insbesondere Musiktitel zur Wiedergabe über den Media Player 1 auswählen, während weiterhin im Hintergrund die Navigation ausgeführt wird.

Ein weiterer Druck auf die Taste "A" der Navigationseinheit 2 führt wiederum zu einem Wechsel des aktuellen Anzeigemodus. In diesem Fall wird somit die zuvor gestartete Medienwiedergabeanzeige bzw. das Musikmenü vom Display des Media Players 1 gelöscht, und es wird auf dem Media Player 1 wieder die Navigationsgrafik angezeigt. Dabei wird jedoch die laufende Musikwiedergabe nicht unterbrochen, so dass die nun wieder aktive Navigationsanzeige bei gleichzeitig im Hintergrund weiter laufender Medienwiedergabe bzw. Musik erfolgen kann.

Beim Drücken der Taste "B" hingegen erfolgt ein Abbruch der aktuellen Routenführung, so dass anschließend beispielsweise wieder ein neues Reiseziel eingegeben und eine neue Routenführung gestartet werden kann.

In **Fig. 11** sind (gemäß Funktion 5 in **Fig. 7)** die Verfahrensschritte bei der Routenberechnung und bei der Ausgabe der Routenführungsanweisungen dargestellt.

Demnach werden - im Anschluss an die Aktivierung der Routenberechnung und -Führung - von der Adresseingabekomponente der Navigationssoftware in der Navigationseinrichtung zunächst die Tabellenwerte des Reiseziels gelesen und diese der Routenberechnungskomponente als Zieladresse zur Verfügung gestellt.

Anschließend wird von der Lokalisierungskomponente der Navigationssoftware die aktuelle geographische Position ermittelt und der Routenkalkulationskomponente sowie der Grafikkomponente der Navigationssoftware zur Verfügung gestellt.

Auf Basis der aktuellen geographischen Position sowie der Zieladresse errechnet die Navigationssoftware der Navigationseinrichtung die Route von der aktuellen Position zu Zieladresse. Mittels der errechneten Route erzeugt sodann die Routenführungskomponente die grafischen und akustischen Routenführungsanweisungen, und stellt diese der Grafikanzeigekomponente und dem Audiotreiber zur Verfügung.

Auf Basis der grafischen Routenführungsanweisungen erzeugt die Grafikanzeigekomponente einen entsprechenden Routenführungsbildschirm. Dabei wird der Routenführungsbildschirm im Media Player-Grafikanzeigeformat erzeugt und im temporären Speicher abgelegt. Auf diese Weise ist bei der Ausführungsform mit einem handelsüblichen Media Player 1 sichergestellt, dass der Media Player 1 den Routenführungsbildschirm anzeigen kann, obwohl der Media Player 1 bei dieser Ausführungsform selbst keinerlei Navigationsanzeigefunktionen unterstützt.

Im Anschluss hieran werden Routenführungsbildschirm und Audiodaten an den Media Player 1 gesendet, wonach der Media Player 1 den Routenführungsbildschirm anzeigt und die Audiodaten abspielt. Weitere Ausführungsformen können so ausgebildet sein, dass dem Media Player 1 alternativ oder zusätzlich zur Routenführungsgrafik auch textliche Navigationsanweisungen zur Anzeige auf dem Bildschirm des Media Players 1 zur Verfügung gestellt werden.

Der Routenausgabeprozess wird gemäß **Fig. 11** in regelmäßigen Abständen, beispielsweise im Sekundenabstand wiederholt, um die Routenführungsanzeige auf dem Display des Media Players 1 regelmäßig aufzufrischen und an die Veränderungen der lokalen Position anzupassen, und um ferner stets die aktuellen akustischen Routenführungsanweisungen ausgeben zu können.

Die **Fig. 12** und **13** zeigen zwei Varianten des Update-Vorgangs der beim Nutzer vorhandenen navigationsbezogenen Daten, vgl. hierzu auch **Fig. 8.** Gemäß **Fig. 12** kann hierzu über den Personalcomputer 13 des Nutzers eine Onlineverbindung 14 zu einem Server 15 des Navigationsanbieters hergestellt werden. Nach Herstellung der Verbindung 14 vergleicht eine auf dem Personal Computer installierte Updatesoftware die Versionen jeweils der Navigationssoftware, der Reiseziellisten und der Straßenkarte zwischen Personal Computer 13 und Server 15 bzw. zwischen Media Player 1 und Server 15. Falls auf dem Server 15 des Anbieters eine neuere Version der Navigationssoftware, der Reiseziellisten und/oder der Straßenkarte vorliegt, wird die neuere Version heruntergeladen und auf dem Personal Computer 13 gespeichert bzw. auf den Media Player 1 übertragen.

Der Media Player 1 kann hierzu beispielsweise über eine Dockingstation, eine Kabelverbindung oder eine drahtlose Verbindung mit dem Personal Computer verbunden sein. Der Massenspeicher 16 neben dem Media Player 1 in **Fig. 12** soll dabei die auf dem Media Player 1 gespeicherten Datenbanken symbolisieren. Im Rahmen des Updates können auf dem Media Player 1 bzw. auf dessen Massenspeicher 16 ferner Versionsinformationen und Dateien für die Reiseziellisten, für die Software der Navigationseinheit 2 sowie ggf. Update-Dateien für die Straßenkarte gespeichert werden.

Der zugehörige Ablauf beim Update von Software und Straßenkarten ist im Detail in **Fig. 8** dargestellt.

**Fig. 13** stellt einen zusätzlichen oder alternativen Ablauf bezüglich des Updates von Software und/oder Straßenkarten schematisch dar. Die Ablaufdarstellung gemäß **Fig. 13** unterscheidet sich von der Ablaufdarstellung gemäß **Fig. 12** darin, dass das Ziel des Updates nicht durch den Media Player 1, sondern durch einen Wechselspeicher 17, beispielsweise durch eine Flash-Speicherkarte gebildet ist, wobei das Massenspeichersymbol 18 die auf der Speisekarte gespeicherten Datenbanken symbolisiert.

Dies bedeutet, das bei der Ablaufdarstellung gemäß **Fig. 13** die Versionsinformationen und Dateien 18 bezüglich der Ziellisten, der Software der Navigationseinheit 2 und der Straßenkarte zwischen dem Wechselspeicher 17 und dem Server 15 des Anbieters verglichen werden. Das ggf. erforderliche Update der Dateien 18 auf der Speicherkarte 17 erfolgt in der gleichen Weise wie bei **Fig. 12,** und entspricht damit auch wieder der ausführlichen Darstellung in **Fig. 8.**

Insbesondere bei der Ausführungsform der Erfindung mit einem handelsüblichen Media Player 1 kommen ggf. beide Varianten des Update-Prozesses gemäß **Fig. 12** und **Fig. 13** zum Einsatz. Normalerweise wird der Nutzer lediglich seinen Media Player 1 mit dem Personal Computer 13 bzw. mit dem Server 15 des Anbieters verbinden, um auf diese Weise nicht nur Mediendateien wie zum Beispiel Musikalben auf den Media Player 1 herunterzuladen, sondern um so auch seine auf dem Media Player 1 gespeicherten Ziellisten auf dem neuesten Stand zu halten, oder um zusätzliche Ziellisten, beispielsweise für andere Reiseländer, vom Anbieterserver 15 herunterzuladen.

Bei dieser Gelegenheit können ferner auch die Versionsinformationen für die Straßenkarte und die Software der Navigationseinheit 2, wie auch ggf. Update-Bestandteile für Software und/oder Straßenkarte heruntergeladen und auf den Media Player 1 übertragen werden. Bei einer späteren Wiederherstellung der Verbindung zwischen Media Player 1 und Navigationseinheit 2 kann sodann der interne Versionsabgleich zwischen Media Player 1 und Navigationseinheit 2 erfolgen, und zumindest Teile der in der Navigationseinheit 2 vorhandenen Daten und/oder Software können anhand der im Media Player 1 gespeicherten Updatebestandteile auf den neusten Stand gebracht werden.

Die Abläufe hierzu sind im Detail in der Darstellung gemäß **Fig. 8** sowie in den zugehörigen Beschreibungsabschnitten ausgeführt.

Falls auf dem Massenspeicher des Media Players 1 jedoch nicht genügend Speicherplatz für ein etwaiges Update insbesondere der Straßenkarte vorhanden sein sollte, so kann der Nutzer von der Update-Software aufgefordert werden, anstelle des Media Players 1 den Wechselspeicher der Navigationseinheit 2 mit dem Personal Computer zu verbinden, also beispielsweise die Speicherkarte der Navigationseinheit 2 in einen entsprechenden Kartenleser am Personal Computer einzuführen. Anschließend kann auch das Update der Straßenkarte vom Anbieterserver heruntergeladen und auf die Speicherkarte übertragen werden.

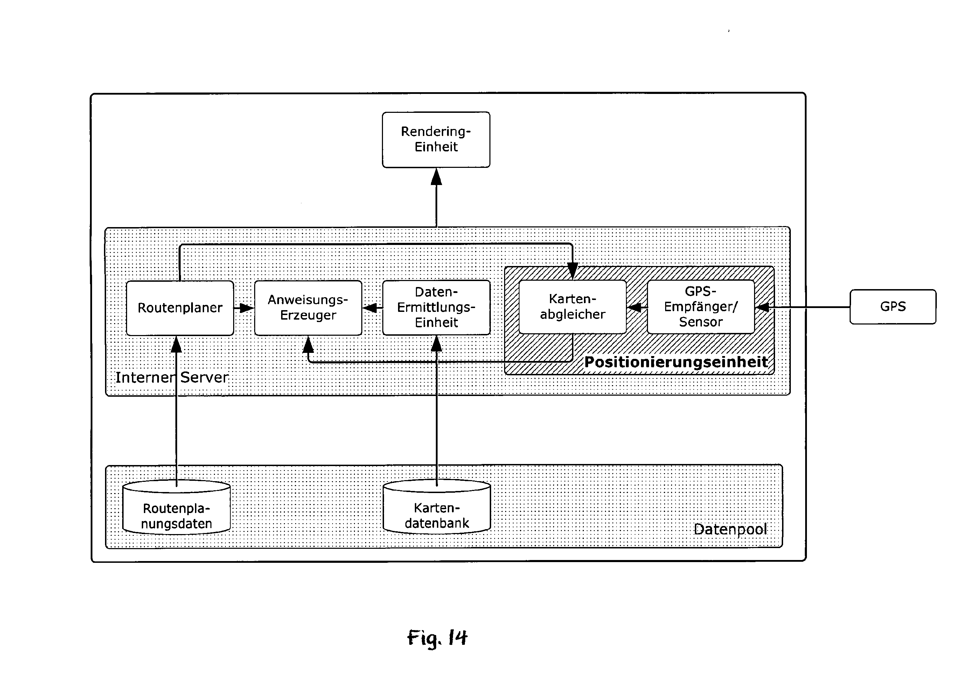

**Fig. 14** zeigt schematisiert die Anordnung der zur Routenberechnung eingesetzten Komponenten bei einer Ausführungsform einer Navigationseinrichtung gemäß der vorliegenden Erfindung.

Neben dem die Routenplanungsdaten, z.B. Reiseziellisten, sowie die Straßenkarten umfassenden Datenpool umfasst die Navigationseinrichtung gemäß **Fig. 14** den Routenplaner zur eigentlichen Berechnung der Route anhand des aktuellen Standorts sowie anhand des eingegebenen Reiseziels, den Anweisungserzeuger zur Erzeugung der auszugebenden grafischen, textlichen und/oder akustischen Routenführungsanweisungen, die Datenermittlungseinheit für Ermittlung und Abruf der notwendigen Daten aus der Straßenkarte, die Positionierungseinheit zur Ermittlung der aktuellen geographischen Position und deren Abgleich mit der aktuellen Straßenkarte, sowie die Renderingeinheit zur Erzeugung der Routenführungsgrafiken.

Die Komponenten sind dabei in **Fig. 14** dargestellt und angeordnet unabhängig davon, ob einzelne, mehrere oder alle der abgebildeten Komponenten in der Navigationseinheit 2 oder etwa im Media Player 1 untergebracht sind.

In den **Fig. 15** bis **20** ist dargestellt, auf welche Weise am Media Player 1 die Eingabe des gewünschten Reiseziels erfolgt. Dabei zeigen **Fig. 15** und **Fig. 16** zwei unterschiedliche Varianten des Startbildschirms der Navigation, die unterschiedlichen Ausführungsformen zugeordnet sind.

**Fig. 15** betrifft die Ausführungsform mit handelsüblichem Media Player 1, bei der die Umschaltung zwischen Medien-Abspielbetrieb und Navigationsbetrieb noch durch Betätigen der separaten Taste "A" erfolgt, die an der Navigationseinheit 2 angeordnet ist (vgl. **Fig. 1).** Bei dieser Ausführungsform ist dies erforderlich, da der handelsübliche Media Player 1 von sich aus noch keine eigenständige Umschaltung zwischen Medien-Abspielbetrieb und Navigationsbetrieb bereitstellt. Daher zeigt der Media Player 1 gemäß **Fig. 15,** der sich hier gerade im Navigationsbetrieb befindet, lediglich Menüeinträge, die den Navigationsbetrieb betreffen.

**Fig. 16** hingegen betrifft eine Ausführungsform mit einem modifizierten Media Player 1, bei dem Software und/oder Hardware bereits so weit modifiziert sind, dass die Umschaltung zwischen Medien-Abspielbetrieb und Navigationsbetrieb direkt über die Bedienoberfläche des Media Players 1 erfolgen kann, so dass keine separaten Betätigungselemente "A" oder "B" mehr an der Navigationseinheit 2 erforderlich sind. Daher zeigt der Media Player 1 gemäß **Fig. 16,** der sich hier gerade im übergreifenden Funktionsauswahlmenü befindet, Menüeinträge sowohl bezüglich der Navigationsfunktion als auch bezüglich des Medien-Abspielbetriebs.

Unabhängig von der Betrachtung der Ausführungsform gemäß **Fig. 15** oder gemäß **Fig. 16** erfolgt das Blättern durch Ziellisten und die Auswahl des gewünschten Ziellisteneintrags wie in den **Fig. 17** bis **20** dargestellt. Lediglich die im Hintergrund erfolgende Handhabung und Aufbereitung der auf dem Display des Media Player 1 angezeigten Ziellisten unterscheidet sich bei den Ausführungsformen gemäß **Fig. 15** und **Fig. 16.** Bei der Ausführungsform gemäß **Fig. 15** (handelsüblicher Media Player) übernimmt diese Handhabung und Aufbereitung der Ziellisten komplett die Navigationseinheit 2, indem sie die Ziellisten in dem vom Media Player 1 darstellbaren Playlisten-Format an den Media Player 1 sendet. Bei der Ausführungsform gemäß **Fig. 16** (modifizierter Media Player) hingegen kann Handhabung und Aufbereitung der Ziellisten auch vom Media Player 1 selbst übernommen werden.

In beiden Fällen wird in **Fig. 17** auf dem Display des Media Players 1 nun zunächst eine Länderauswahl angezeigt. Der Nutzer kann aus den angebotenen Ländern mittels der Bedienungselemente des Media Players 1 die gewünschte Auswahl genau in der Weise treffen, mit der er üblicherweise zur Auswahl von Musiktiteln auf dem Media Player 1 vorgeht. Nach der Auswahl des Ziellandes werden dem Nutzer sukzessive Stadtauswahl, Straßenauswahl, und Hausnummernauswahl angeboten, vgl. **Fig. 18** bis **20.** Wieder wählt der Nutzer in der üblichen Weise wie bei einer Musik-Playliste die gewünschte Stadt, die gewünschte Straße und die Hausnummer des Reiseziels, und bestätigt die Angabe anschließend durch das entsprechende Eingabeelement des Media Players 1.

Im Anschluss an die somit erfolgte Zieleingabe kann die Routenberechnung und Routenführung gestartet werden, wie dies ausführlich in **Fig. 11** und dem zugehörigen Beschreibungsteil dargestellt ist.

Im Ergebnis wird somit deutlich, dass dank der Erfindung eine modulare Navigationseinrichtung geschaffen wird, die insbesondere eine Zusammenführung der beiden separaten Geräte- und Dienstleistungsgattungen 'Navigation' und 'Persönliches Multimedia' ermöglicht.

Dank der Erfindung lässt sich der Einsatzbereich von Multimedia-Abspielgeräten auf das Gebiet der Navigation vergrößern, wobei insbesondere die dem Nutzer vertraute Bedienoberfläche und der gewohnte Zugang zu entsprechenden Services des Dienstleistungsanbieters auch für den Anwendungsbereich Navigation erhalten bleiben. Es lassen sich ferner Hardwarekosten einsparen, und bei einem Einsatz im Kraftfahrzeug lässt sich dank Vereinheitlichung von Geräten und Bedienoberflächen ein Gewinn an Sicherheit und Bedienkomfort erzielen.

Die Erfindung liefert damit einen fundamentalen Beitrag zur Verbesserung der Praktikabilität, Benutzerfreundlichkeit und Kosteneffektivität im Bereich der Navigationsgeräte, bei gleichzeitig erheblicher Erweiterung des Einsatzbereichs von portablen Multimedia-Abspielgeräten sowie zugehöriger Online-Services.

## Patentansprüche

1. Navigationseinrichtung, umfassend eine Navigationseinheit (2), eine Positionsbestimmungseinrichtung, eine Prozessoreinrichtung mit Arbeitsspeicher, eine Massenspeichereinrichtung zur Aufnahme einer Datenbank, eine Anzeigeeinrichtung, eine Bedienelementanordnung, eine Tonausgabeeinrichtung sowie eine in den Arbeitsspeicher bzw. in die Prozessoreinrichtung aufnehmbare Navigationssoftware,
**dadurch gekennzeichnet,**
**dass** Anzeigeeinrichtung und Bedienelementanordnung separat in einem mobilen Multimedia-Abspielgerät (1) angeordnet sind.

2. Navigationseinrichtung nach Anspruch 1,
**dadurch gekennzeichnet,**
**dass** Navigationsziele und zugehörige Steuerzeichen in ein zum Medien-Wiedergabelistenformat des Multimedia-Abspielgeräts (1) kompatibles Listenformat umgewandelt und gespeichert sind.

3. Navigationseinrichtung nach Anspruch 1 oder 2,
**gekennzeichnet durch**
eine Einrichtung zur Umwandlung einer Routenführungsgrafik in ein zum Ausgabegrafikformat des Multimedia-Abspielgeräts (1) kompatibles Grafikformat.

4. Navigationseinrichtung nach einem der Ansprüche 1 bis 3,
**dadurch gekennzeichnet,**
**dass** die Navigationseinheit (2) eine Einrichtung zur Übertragung des von dem Multimedia-Abspielgerät (1) gelieferten Audiosignals an ein externes Lautsprechersystem umfasst.

5. Navigationseinrichtung nach einem der Ansprüche 1 bis 4,
**dadurch gekennzeichnet,**
**dass** die Massenspeichereinrichtung im Multimedia-Abspielgerät (1) angeordnet ist.

6. Navigationseinrichtung nach einem der Ansprüche 1 bis 5,
**dadurch gekennzeichnet,**
**dass** die Navigationseinheit (2) eine zu der standardisierten Schnittstelle des Multimedia-Abspielgeräts kompatible Übertragungsschnittstelle (5) aufweist.

7. Navigationseinrichtung nach Anspruch 6,
**dadurch gekennzeichnet,**
**dass** die Übertragungsschnittstelle (5) eine drahtlose Schnittstelle ist.

8. Navigationseinrichtung nach einem der Ansprüche 1 bis 7,
**dadurch gekennzeichnet,**
**dass** die Navigationseinheit (1) in einem Kraftfahrzeug eingebaut ist.

9. Navigationseinrichtung nach einem der Ansprüche 1 bis 8,
**dadurch gekennzeichnet,**
**dass** die Navigationseinheit (1) ein Bedienelement (A, B) zur Umschaltung des Multimedia-Abspielgeräts (1) zwischen Medien-Abspielbetrieb und Navigationsbetrieb aufweist.

10. Navigationseinrichtung nach Anspruch 9,
**dadurch gekennzeichnet,**
**dass** das Bedienelement (A, B) zur Umschaltung des Multimedia-Abspielgeräts (1) zwischen Medien-Abspielbetrieb und Navigationsbetrieb an einer Fernsteuerungseinheit angeordnet ist.

11. Navigationseinrichtung nach einem der Ansprüche 1 bis 8,
**dadurch gekennzeichnet,**
**dass** das Multimedia-Abspielgerät (1) zum gleichzeitigen Medien-Abspielbetrieb und Navigationsbetrieb eingerichtet ist.

12. Navigationseinrichtung nach einem der Ansprüche 1 bis 11,
**dadurch gekennzeichnet,**
**dass** die Navigationseinheit (2) als Halterung für das Multimedia-Abspielgerät (1) ausgebildet ist.

13. Navigationseinrichtung nach einem der Ansprüche 1 bis 11,
**dadurch gekennzeichnet,**
**dass** die Navigationseinheit (2) eine Halterung für das Multimedia-Abspielgerät (1) sowie eine separate Steuerungseinheit umfasst.

14. Navigationseinrichtung nach einem der Ansprüche 1 bis 13,
**dadurch gekennzeichnet,**
**dass** Prozessoreinrichtung und Arbeitsspeicher der Navigationseinrichtung im Multimedia-Abspielgerät (1) angeordnet sind.

15. Verfahren zur Ausgabe von Navigationsanweisungen einer Navigationseinrichtung, die Navigationseinrichtung umfassend eine Navigationseinheit (2), eine Positionsbestimmungseinrichtung, eine Prozessoreinrichtung mit Arbeitsspeicher, eine Massenspeichereinrichtung, eine Anzeigeeinrichtung, eine Bedienelementanordnung, eine Tonausgabeeinrichtung sowie eine in den Arbeitsspeicher bzw. in die Prozessoreinrichtung aufnehmbare Navigationssoftware, wobei Anzeigeeinrichtung und Bedienelementanordnung der Navigationseinrichtung in einem separaten mobilen Multimedia-Abspielgerät (1) angeordnet sind,
das Verfahren aufweisend die nachfolgenden Verfahrensschritte:
a) anbieterseitige Bereitstellung von geographischen Datensätzen, insbesondere von Straßenkarten, sowie von Zieladressen, auf einem Datenträger;
b) Abruf einer Anzahl geographischer Datensätze und/oder Zieladressen von dem Datenträger mittels eines nutzerseitigen Clientsystems;
c) Übertragung der abgerufenen geographischen Datensätze und/oder Zieladressen auf das Multimedia-Abspielgerät (1);
d) Anzeige einer Liste von Zieladressen auf dem Display des Multimedia-Abspielgeräts (1);
e) Auswahl einer Zieladresse mittels der Bedienelemente des Multimedia-Abspielgeräts (1) durch den Nutzer;
f) Übertragung der ausgewählten Zieladresse an die Prozessoreinrichtung der Navigationseinrichtung;
g) Erzeugung von grafischen und/oder akustischen Routenführungsanweisungen mittels der Navigationssoftware; und
h) Ausgabe der grafischen und/oder akustischen Routenführungsanweisungen mittels des Multimedia-Abspielgeräts (1).

16. Verfahren nach Anspruch 15,
**dadurch gekennzeichnet,**
**dass** die Bereitstellung der geographischen Datensätze im Verfahrenschritt a) auf einem Datenträger eines anbieterseitigen Computerservers mittels eines Zugangsservice erfolgt.

17. Verfahren nach Anspruch 15 oder 16,
**dadurch gekennzeichnet,**
**dass** im Verfahrenschritt b) der Abruf einer vom Nutzer definierbaren Menge an geographischen Datensätzen bzw. Zieladressen erfolgt.

18. Verfahren nach einem der Ansprüche 15 bis 17,
**dadurch gekennzeichnet,**
**dass** Zugang zu und Abruf der geographischen Datensätze bzw. Zieladressen im Verfahrenschritt b) im Anschluss an eine persönliche Identifikation des Nutzers erfolgt.

19. Verfahren nach einem der Ansprüche 15 bis 18,
**dadurch gekennzeichnet,**
**dass** der Abruf der geographischen Datensätze bzw. Zieladressen im Verfahrenschritt b) in Abhängigkeit der abgerufenen Anzahl an Datensätzen kostenpflichtig ist.

20. Verfahren nach einem der Ansprüche 15 bis 19,
**dadurch gekennzeichnet,**
**dass** der Abruf der geographischen Datensätze bzw. Zieladressen im Verfahrenschritt b) in Abhängigkeit der genutzten Anzahl an Datensätzen kostenpflichtig ist.

21. Verfahren nach einem der Ansprüche 15 bis 20,
**dadurch gekennzeichnet,**
**dass** auf dem Massenspeicher der Navigationseinrichtung unabhängig von Downloads des Nutzers ein Umfang an geographischen Datensätzen bzw. Zieladressen gespeichert ist, wobei im Verfahrenschritt e) vom Nutzer nur diejenigen der gespeicherten Datensätze bzw. Zieladressen ausgewählt werden können, die zudem in einem kostenpflichtigen Download des Nutzers vom anbieterseitigen Computerserver enthalten bzw. gelistet waren.

22. Verfahren nach einem der Ansprüche 15 bis 21,
**dadurch gekennzeichnet,**
**dass** im Verfahrenschritt b) ein Versionsnummernvergleich der auf dem nutzerseitigen Clientsystem und/oder auf dem mobilen Multimedia-Abspielgerät (1) gespeicherten geographischen Datensätze, Zieladressenlisten bzw. Navigationssoftwareversionen mit der anbieterseitig vorhandenen Version der Datensätze, Zieladressenlisten bzw. Navigationssoftware erfolgt, wobei ggf. ein Update der nutzerseitig vorhandenen Daten bzw. Software vorgenommen wird.

23. Verfahren nach einem der Ansprüche 15 bis 22,
**dadurch gekennzeichnet,**
**dass** das nutzerseitige Clientsystem durch einen Personal Computer des Nutzers gebildet ist, wobei Abruf und Übertragung der geographischen Datensätze bzw. Zieladressen in den Verfahrensschritten b) und c) mittels des Personal Computers erfolgt.

24. Verfahren nach einem der Ansprüche 15 bis 23,
**dadurch gekennzeichnet,**
**dass** das nutzerseitige Clientsystem durch die Navigationseinheit (2) gebildet ist, wobei Abruf und Übertragung der geographischen Datensätze bzw. Zieladressen in den Verfahrensschritten b) und c) mittels der Navigationseinheit (2) erfolgt.

25. Verfahren nach einem der Ansprüche 15 bis 24,
**dadurch gekennzeichnet,**
**dass** die geographischen Datensätze bzw. Zieladressen anbieterseitig in ein Playlisten-Format des Multimedia-Abspielgeräts (1) gewandelt und auf dem Datenträger abgelegt sind, und dass die Datensätze bzw. Zieladressen im Verfahrenschritt d) im Playlisten-Format auf dem Display des Multimedia-Abspielgeräts (1) angezeigt werden.

26. Verfahren nach einem der Ansprüche 15 bis 25,
**dadurch gekennzeichnet,**
**dass** die Erzeugung der grafischen Routenführungsanweisungen im Verfahrenschritt g) in einem zum Ausgabegrafikformat des Multimedia-Abspielgeräts (1) kompatiblen Grafikformat erfolgt.

27. Verfahren nach einem der Ansprüche 15 bis 26,
**dadurch gekennzeichnet,**
**dass** im Verfahrenschritt a) der Abruf von zusätzlichen geographisch verknüpften Inhalten erfolgt, insbesondere bezüglich Sehenswürdigkeiten, Veranstaltungen und nutzerinteressensbezogenen Inhalten.
